(19) **Europäisches Patentamt / European Patent Office / Office européen des brevets**

(11) **EP 1 513 904 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(21) Anmeldenummer: **03740150.2**

(22) Anmeldetag: **26.05.2003**

(51) Int Cl.:
***C09J 5/00*** (2006.01)

(86) Internationale Anmeldenummer:
**PCT/EP2003/005512**

(87) Internationale Veröffentlichungsnummer:
**WO 2003/099951 (04.12.2003 Gazette 2003/49)**

(54) **VERFAHREN ZUR OBERFLÄCHENMODIFIZIERUNG EINES FESTKÖRPERS UND DARAUS HERGESTELLTE MIKROSTRUKTURIERTE OBERFLÄCHEN MIT GESTEIGERTER ADHÄSION**

METHODS FOR MODIFYING THE SURFACES OF A SOLID AND MICROSTRUCTURED SURFACES WITH INCREASED ADHERENCE PRODUCED WITH SAID METHODS

PROCEDE DE MODIFICATION DE SURFACE D'UN CORP SOLIDE ET SES SURFACES MICROSTRUCTUREES A PLUS FORTE ADHERENCE

(84) Benannte Vertragsstaaten:
**AT BE BG CH CY CZ DE DK EE ES FI FR GB GR HU IE IT LI LU MC NL PT RO SE SI SK TR**

(30) Priorität: **24.05.2002 DE 10223234**

(43) Veröffentlichungstag der Anmeldung:
**16.03.2005 Patentblatt 2005/11**

(73) Patentinhaber: **Max-Planck-Gesellschaft zur Förderung
der Wissenschaften e.V.
80539 München (DE)**

(72) Erfinder:
• **ARZT, Eduard
71254 Ditzingen (DE)**
• **GORB, Stanislav
71229 Leonberg (DE)**
• **GAO, Huajian
70192 Stuttgart (DE)**
• **SPOLENAK, Ralf
70178 Stuttgart (DE)**

(74) Vertreter: **Hertz, Oliver
v. Bezold & Partner
Patentanwälte
Akademiestrasse 7
80799 München (DE)**

(56) Entgegenhaltungen:
**WO-A-01/49776**

• **DATABASE BIOSIS [Online] BIOSCIENCES INFORMATION SERVICE, PHILADELPHIA, PA, US; Dezember 2001 (2001-12) AUTUMN K: "The gecko effect: Dynamic dry adhesive microstructures." Database accession no. PREV200200472202 XP002256441 & AMERICAN ZOOLOGIST, Bd. 41, Nr. 6, Dezember 2001 (2001-12), Seiten 1382-1383, Annual Meeting of the Society for Integrative and Comparative Biology;Anaheim, California, USA; January 02-06, 2002 ISSN: 0003-1569**
• **DATABASE BIOSIS [Online] BIOSCIENCES INFORMATION SERVICE, PHILADELPHIA, PA, US; Dezember 2001 (2001-12) JAGOTA A ET AL: "Gecko feet viewed from the perspective of elastomeric adhesion." Database accession no. PREV200200443080 XP002256442 & AMERICAN ZOOLOGIST, Bd. 41, Nr. 6, Dezember 2001 (2001-12), Seite 1483 Annual Meeting of the Society for Integrative and Comparative Biology; Anaheim, California, USA; January 02-06, 2002 ISSN: 0003-1569**
• **K. AUTUMN ET AL.: "Adhesive force of a single gecko foot-hair" NATURE, [Online] Bd. 405, 8. Juni 2000 (2000-06-08), Seiten 681-685, XP002256115 Gefunden im Internet: <URL: WWW.NATURE.COM> [gefunden am 2003-10-02]**
• **H. GEE: "Biomechanics - Gripping feat" NATURE, [Online] 8. Juni 2000 (2000-06-08), Seite 631 XP002256116 Gefunden im Internet: <URL: WWW.NATURE.COM> [gefunden am 2003-10-02]**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 513 904 B1

**Beschreibung**

Die Erfindung betrifft Verfahren gemäß dem Oberbegriff von Anspruch 1, insbesondere Verfahren zur Mikrostrukturierung von Festkörperoberflächen, Verfahren zur Herstellung eines Verbundes aus Objekten mit modifizierten Oberflächen, Objekte mit adhäsionssteigernd modifizierten Oberflächen und mit derartigen Objekten hergestellte Verbindungen.

Haftverbindungen zwischen gleichartigen oder verschiedenartigen Materialien, die einerseits zuverlässig vorbestimmte Haftkräfte ausbilden und andererseits reversibel lösbar sind, besitzen in der Technik eine große Bedeutung. Anwendungen umfassen beispielsweise die lösbare Verbindung von Bauteilen mittels Klettverbindungen, die Manipulation von Objekten mittels Werkzeugen, magnetische Halterungen von Objekten, Verbindungselemente an Textilprodukten, und das zeitweilige Fixieren von Gegenständen (z. B. Notizzetteln) im Bürobereich. Es wurden zahlreiche Verbindungstechniken entwickelt, die an die jeweilige Aufgabenstellung speziell angepasst sind. Beispielsweise ist es bekannt, in der Automatisierungstechnik Gegenstände mit Saugverbindungen reversibel an Manipulatoren anzubringen und mit diesen zu bewegen. Derartige Saugverbindungen besitzen jedoch einen erheblichen technischen Aufwand. Des Weiteren können reversible Haftverbindungen auch mit Klebstoffen hergestellt werden. Dies besitzt.jedoch Nachteile in Bezug auf die ggf. beschränkte chemische Verträglichkeit der verbundenen Materialien mit dem verwendeten Klebstoff und in Bezug auf die Bildung von Rückständen.

Es sind auch rückstandsfreie Haftverbindungen bekannt, die insbesondere auf einer chemischen und/oder mechanischen Modifizierung der Oberflächen der zu verbindenden Materialien beruhen. Bspw. werden in US 5 755 913 verschiedene Möglichkeiten einer chemischen Modifizierung von Polymerschichten zur Erhöhung von deren Adhäsionsfähigkeit beschrieben. Die Oberflächenbausteine einer Polymerschicht werden bspw. durch chemische Behandlung oder Bestrahlung so modifiziert, dass freie Bindungsplätze, elektrostatische Wechselwirkungen, ionische Wechselwirkungen oder andere Bindungserscheinungen auftreten. Ein wichtiger Nachteil der chemischen Modifizierung besteht in deren Beschränkung auf bestimmte Polymermaterialien.

Aus US 6 099 939, US 6 107 185 und US 4 615 763 sind mechanische Oberflächenmodifizierungen bekannt, die im Wesentlichen auf einer Aufrauhung von Oberflächen beruhen. Die Aufrauhung erfolgt bspw. durch selektives Ätzen. Durch die veränderte Oberflächenmorphologie soll die effektiv haftende Oberfläche des Materials vergrößert werden. Ein Nachteil dieser Technik besteht wiederum in der Beschränkung auf bestimmte Materialien, z. B. Polymere. Diese Materialien müssen ferner genügend weich sein, da sonst die Kontaktbildung gerade durch die höchsten Erhebungen in der aufgerauten Oberfläche behindert wird. Schließlich sind die Techniken zur Aufrauhung der Oberfläche schwer steuerbar, so dass nur beschränkt quantitativ definierte Haftkräfte eingestellt werden können.

Aus WO 99/32005 ist bekannt, die Oberflächen von Gegenständen durch ein Befestigungselement zu modifizieren, das aus einem schichtförmigen Träger und stabförmigen Vorsprüngen besteht. Der Träger wird auf den zu modifizierenden Gegenstand aufgeklebt, so dass die Vorsprünge in den Raum ragen und eine Verankerung mit einer entsprechend modifizierten Oberfläche eines weiteren Gegenstandes bewirken. Das Befestigungselement bildet somit keine Adhäsionsverbindung, sondern eine mechanische Verankerung. Die stabförmigen Vorsprünge müssen notwendig mit einer hohen Stabilität und passenden Geometrie hergestellt werden. So besitzen die Vorsprünge charakteristische Querschnittsdimensionen und gegenseitige Abstände im mm-Bereich. Zur Herstellung einer zuverlässigen Haftverbindung muss zusätzlich Klebstoff verwendet werden.

Die Modifizierung der Oberflächenmorphologie von Festkörpern ist auch in anderen technischen Zusammenhängen bekannt. Bspw. werden in WO 96/04123 und WO 00/50232 eine selbstreinigende Wirkung von Oberflächen mit einer Struktur aus Erhebungen und Vertiefungen beschrieben. Es hat sich gezeigt, dass strukturierte Oberflächen aus hydrophoben Polymeren mit typischen Strukturierungsdimensionen oberhalb von 5 $\mu$m eine adhäsionsmindernde Wirkung besitzen.

Untersuchungen der Erfinder haben gezeigt, dass im Verlauf der Evolution auch in der Natur Haftsysteme entwickelt wurden, die bspw. Insekten erlauben, auf beliebig orientierten Oberflächen zu laufen oder unter bestimmten Bedingungen Körperteile aneinander zu fixieren. Diese Haftsysteme basieren auf der Ausbildung feinster Behaarungen, z. B. an den Insektenbeinen, wie bspw. von M. Scherge und S. N. Gorb in "Biological Micro- and Nanotribology" (Springer-Verlag) beschrieben wird.

Haftsysteme auf der Grundlage adhäsiver Mikrostrukturen wurden auch nach der Untersuchung der Strukturen entwickelt, die an Gecko-Beinen gebildet sind (siehe WO 01/49776). Diese Versuche, die Haftsysteme des Gecko technisch zu verwenden, blieben jedoch auf die Übertragung der Gecko-Strukturen auf technische Gegenstände oder deren synthetische geometrische Nachbildungen beschränkt. Die reine Nachbildung der Gecko-Strukturen besitzt jedoch den Nachteil, dass die Anwendung entsprechender Haftsysteme auf ideale, glatte Oberflächen beschränkt ist und in Bezug auf die Haltekräfte und die Anwendung bei realen, insbesondere rauhen oder fraktalen Oberflächen Nachteile aufweisen.

Die Aufgabe der Erfindung ist es, verbesserte Verfahren zur Oberflächenmodifizierung bereit zu stellen, mit denen die Adhäsionsfähigkeit der modifizierten Oberflächen erhöht wird und mit denen die Nachteile der herkömmlichen Techniken vermieden werden. Das erfindungsgemäße Verfahren soll insbesondere die Ausbildung lösbarer Haftverbindungen für einen erweiterten Bereich von Materialien und Oberflächen, eine erhöhte Adhäsionsfähigkeit an realen, ggf. unebenen Oberflächen und die Einstellung vorbestimmter Haftkräfte oder -eigenschaften ermöglichen. Eine weitere Aufgabe der Erfindung ist die Bereitstellung eines Verfahrens zur Herstellung eines Verbundes aus mehreren Objekten, deren Oberflächen zur Erhöhung der Adhäsionsfähigkeit modifiziert sind. Weitere Aufgaben der Erfindung bestehen in der Bereitstellung verbesserter Oberflächenmodifizierungen, die eine erhöhte Adhäsionsfähigkeit ermöglichen.

Diese Aufgaben werden durch Verfahren und strukturierte Oberflächen mit den Merkmalen gemäß den Patentansprüchen 1 oder 29 gelöst. Vorteilhafte Ausführungsformen und Anwendungen der Erfindung ergeben sich aus den abhängigen Ansprüchen.

Gemäß einem wichtigen Merkmal der hier beschriebenen Verfahren zur Oberflächenmodifizierung eines Objektes ist vorgesehen, dass die Oberfläche einer Strukturierung durch Bildung einer Vielzahl von Vorsprüngen jeweils mit einer Stirnfläche unterzogen wird, wobei die Vorsprünge derart dimensioniert werden, dass sämtliche Stirnflächen die gleiche senkrechte Höhe über der Oberfläche besitzen und damit eine adhärente Kontaktfläche bilden, die lediglich durch gegenseitigen Abstände oder Lücken zwischen den Stirnflächen unterbrochen ist. Durch diese Maßnahme wird die ursprünglich (unmodifiziert) geschlossene Oberfläche in eine Kontaktfläche überführt, in der die Stirnflächen eine Vielzahl von Einzelkontakten (sogenannte Mikrokontakte) bilden. Vorteilhafterweise wird durch diese Aufspaltung in Mikrokontakte eine Adhäsionserhöhung erzielt, wie durch Experimente und die unten genannten theoretischen Überlegungen gezeigt werden konnte. Dieses Ergebnis ist überraschend, da die Kontaktfläche als Summe der Stirnflächen zunächst eine kleinere Haftfläche zu bieten scheint als die ursprünglich unmodifizierte Oberfläche. Dennoch wird die Adhäsionsfähigkeit erhöht, wobei dies sogar in vorbestimmter Weise auf die Anforderungen der jeweiligen Anwendung zugeschnitten werden kann. Die Anordnung der Stirnflächen mit einer konstanten senkrechten Höhe über der Oberfläche besitzt den zusätzlichen Vorteil, dass die Haftverbindung nicht durch vorstehende Mikrokontakte geschwächt wird.

Erfindungsgemäß sind die Vorsprünge gegenüber der Oberfläche geneigt gebildet. Durch die Neigung der Vorsprünge wird bei der Ausbildung einer Haftverbindung zwischen zwei Objekten bei der Kontaktbildung eine Scherkomponente aufgebracht, durch die die Adhäsionsfähigkeit erhöht wird. Die Neigung, die Elastizität, die Dimensionierung und/oder die unten erläuterter Elastizitätsparameter der Vorsprünge können vorteilhafterweise je nach Anwendung optimiert werden.

Die oben genannte Aufgabe der Erfindung wird gemäß einem ersten wichtigen Gesichtspunkt dadurch gelöst, dass die Vorsprünge relativ zur Oberfläche geneigt aus einem elastischen Material mit einem Gradienten des Elastizitätsmoduls gebildet werden. Wenn sich die Biegesteifigkeit der Vorsprünge hin zu deren freien Ende und/oder radial quer zu ihren Längsausdehnungen vermindert, ergeben sich die folgenden Vorteile. Die Erfinder haben festgestellt, dass eine Haftverbindung mit einer positiven Anziehungskraft zwischen der strukturierten Oberfläche und einem angrenzenden Körper dann gebildet wird, wenn der Energiegewinn durch die Adhäsion der Kontaktfläche zum Körper größer als die elastische Energie ist, die zur Verbiegung der Vorsprünge erforderlich ist. Durch die Erzeugung des Elastizitäts- oder Biegesteifigkeitsgradienten wird vorteilhafterweise die zur Verbiegung der Vorsprünge erforderliche elastische Energie vermindert, so dass die positive Haftwirkung leichter erzielt wird. Dieser Vorteil ist besonders bei der Anwendung der Erfindung an realen, insbesondere rauhen, unregelmäßig strukturierten Oberflächen ausgeprägt. An derartigen Oberflächen sind Unebenheiten gegeben, die zu einer Verbiegung der Vorsprünge führen. Durch die erfindungsgemäße Einführung des Elastizitätsgradienten wird der Energieverlust durch die Verbiegung an den Vorsprüngen vermindert und dadurch die Adhäsion verbessert.

Wenn gemäß einer bevorzugten Ausführungsform der Erfindung der Gradient des Elastizitätsmoduls zwischen einem oberen und einem unteren Elastizitätswert gebildet wird, wobei der obere Elastizitätswert zwischen 10 MPa und 10 GPa und der untere Elastizitätswert zwischen 20 kPa und 10 MPa liegen, können sich Vorteile in Bezug auf ein besonders weiches Einbiegen der Vorsprünge und damit für einen besonders hohen Adhäsionsgewinn ergeben.

Gemäß einer weiteren bevorzugten Ausführungsform der Erfindung ist vorgesehen, dass die Vorsprünge mit einem effektiven elastischen Modul gebildet, dessen Größe vom Elastizitätsmodul des Materials der Vorsprünge, deren Flächendichte und deren geometrischen Längen- und Querschnittsmaßen abhängt, wobei das effektive elastische Modul mit einem Wert im Bereich von 20 kPa bis 10 MPa eingestellt wird. Durch diese Maßnahme wird wiederum der Energieverlust beim Verbiegen der Vorsprünge an realen Oberflächen vermindert und dadurch die Adhäsionswirkung verbessert.

Die Vorsprünge der erfindungsgemäß gebildeten Oberflächenstruktur bilden relativ zur lokalen Ausrichtung der strukturierten Oberfläche vorzugsweise einen Winkel im Bereich von 89 ° bis 45 °, insbesondere von 80 ° bis 40 Grad. Überraschenderweise hat sich gezeigt, dass bereits eine minimale Neigung der Vorsprünge bei Kontaktbildung mit einem angrenzenden Körper zu einer Verbiegung der Vorsprünge in die gewünschte Richtung führt. Bei der Einstellung dieser Neigungswinkel können sich Vorteile für eine verbesserte Anpassung der Kontaktfläche an eine reale Oberfläche ergeben.

Eine Kontaktfläche wird durch die Gesamtheit der Stirnflächen gebildet. Bei Herstellung einer Haftverbindung berührt die Kontaktfläche die Oberfläche des jeweils anderen Gegenstandes, ohne eine Verankerung einzugehen und ohne ein Ineinandergreifen der Vorsprünge. Die Haftverbindung wird durch van der Waals-Kräfte vermittelt. Zusätzliche Beiträge können durch elektrostatische Kräfte oder Kapillarkräfte geliefert werden. Die Abstände zwischen den Vorsprüngen sind geringer als die Querschnittsdimensionen der Stirnflächen.

Gemäß einer bevorzugten Ausführungsform der Erfindung sind die Vorsprünge derart angeordnet, dass die Stirnflächen ein regelmäßiges Muster (oder Gitter) bilden. Im Unterschied zur herkömmlichen Aufrauhung von Oberflächen besitzt die periodische Anordnung der Vorsprünge den Vorteil, dass Schwachstellen in der Haftverbindung vermieden und eine Homogenisierung der Kontakte erzielt werden.

Gemäß weiteren vorteilhaften Ausführungsformen der Erfindung wird die Kontaktfläche so gebildet, dass die gegenseitigen Abstände benachbarter Stirnflächen weniger als 10 μm, insbesondere weniger als 5 μm (z. B. 4 μm oder weniger) betragen. Des Weiteren besitzen die Stirnflächen vorzugsweise charakteristische Querschnittsdimensionen von weniger als 5 μm. Diese Dimensionierungen, die gemeinsam oder unabhängig realisiert werden und sich ggf. lediglich auf eine Bezugsrichtung beziehen, besitzen den Vorteil einer besonderen Adhäsionserhöhung. Die Auswahl einer Dimensionierung richtet sich nach der konkret zu erzielenden Haftkraft. Die Haftkraft nimmt bei gegebener Gesamtfläche der Mikrokontakte mit der Wurzel aus der Anzahl der Mikrokontakte zu. Mit erfindungsgemäß modifizierten Oberflächen können sogar makroskopische Objekte, z. B. Werkzeuge, zuverlässig miteinander verbunden werden, ohne dass das Gewicht eines der Objekte die Haftverbindung unterbrechen kann.

Gemäß einer vorteilhaften Ausführungsform der Erfindung besitzen die Stirnflächen der Vorsprünge, die gemeinsam die Kontaktfläche bilden, jeweils eine gewölbte Stirnflächenform, die vorzugsweise mit einer Halbkugelform, einer Zylinderform, einer Torusform und/oder einer Napfform realisiert wird. Die Stirnflächenform kann innerhalb der Vielzahl von Vorsprüngen variieren. Die Gestaltung der gewölbten Stirnflächenform, die sich durch erstmalig von den Erfindern vorgenommene Rechnungen ergeben haben, besitzt den Vorteil, dass die Haftkraft der Einzelkontakte durch die genannten Geometrien verbessert wird. Die in Richtung der Längsausdehnung der Vorsprünge nach außen oder entgegengesetzt gewölbten Stirnflächen liefern beim Anlegen an eine angrenzenden Körper einen verminderten Energieverlust bei der Kompression und einen wirkungsvollen Flächenzuwachs zur Vergrößerung der Adhäsionsflächen der Einzelkontakte.

Diese Vorteile sind besonders ausgeprägt, wenn die Vorsprünge mit runden Stirnflächen mit einem Durchmesser im Bereich von 20 nm bis 20 μm und einem Krümmungsradius der Stirnflächenform gebildet wird, der zwischen dem halben Wert des Stirnflächendurchmessers und 5 mm gewählt ist.

Gemäß einer weiteren Variante der Erfindung ist vorgesehen, dass die Vorsprünge mit Kopfteilen gebildet sind, die jeweils eine Membran- oder paddelförmige Erweiterung der Fußteile darstellen, wobei die Dicke der Kopfteile geringer als die Dicke der Fußteile ist. Diese Gestaltung besitzt den besonderen Vorteil, dass die Kopfteile leichter als die Fußteile der Vorsprünge verbogen und dadurch mit geringem Energieverlust beim Kontakt zwischen der strukturierten Oberfläche und einem angrenzenden Körper an dessen Oberfläche angelegt werden können. Entsprechend der Neigung der Vorsprünge hin zur strukturierten Oberfläche erfolgt auch das weitere Biegen der Kopfteile.

Die Kopfteile werden sämtlich mit der gleichen Orientierung relativ zu den Fußteilen gebogen, so dass vorteilhafterweise eine Asymmetrie der Kontaktstruktur erreicht wird. Bei Belastung der Adhäsionsverbindung in einer Richtung entgegengesetzt zur Ausrichtung der Kopfteile ist die Haltekraft größer als bei einer Belastung in einer Richtung entsprechend der Richtung der abgebogenen Kopfteile. Dieser Unterschied der Haltekraft liefert zusätzliche Tangentialkräfte, die bei einer spiegelsymmetrischen Kombination entgegengesetzt geneigter Haltestrukturen wirkungsvoll ausgenutzt werden können.

Die membranförmigen Kopfteile besitzen gemäß einer bevorzugten Ausführungsform der Erfindung eine Dicke im Bereich von 5 nm bis 100 nm und laterale Dimensionen (Länge, Breite) im Bereich von 20 nm bis 1000 nm. Bei Einstellung dieser geometrischen Parameter können besonders hohe Haltekräfte bei einer geringen Beeinflussung benachbarter Vorsprünge erzielt werden.

Wenn die membranförmigen Kopfteile gemäß einer besonders vorteilhaften Variante der Erfindung mit einem Elastizitätsmodul im Bereich von 10 MPa bis 10 GPa gebildet sind, wird der Energieverlust beim Anlegen der strukturierten Oberfläche an einen angrenzenden Körper vorteilhafterweise weiter vermindert.

Ein weiteres wichtiges Merkmal der Erfindung, dass mit Vorteil bei beiden oben genannten Gesichtspunkten der Elastizitätseinstellung realisiert sein kann, ist die Einstellung eines besonders hohen Aspektverhältnisses, d.h. des Verhältnisses aus Länge und Dicke der Vorsprünge von mindestens 5:1. Die Einstellung eines hohen Aspektverhältnisses besitzt den Vorteil einer weichelastischen Verbiegung der Vorsprünge bei Herstellung des Kontakts zum angrenzenden Körper.

Ein weiteres wichtiges Merkmal der Erfindung besteht in der Schaffung einer hierarchischen Oberflächenstruktur, bei der jeweils auf den Stirnflächen von Vorsprüngen wiederum Vorsprünge mit Stirnflächen gebildet sind, welche ihrerseits Vorsprünge mit gegebenenfalls weiter strukturierten Stirnflächen tragen. Die hierarchische Oberflächenstruktur besitzt den folgenden Vorteil.

Für Haftsysteme zum Anhaften bestimmter Körper an glatten Oberflächen können die Oberflächenkontakte in Bezug auf ihre Elastizität und die Geometrie an sich optimal angepasst werden. Dies gilt jedoch lediglich für ideal glatte Oberflächen. Reale Oberflächen hingegen haben eine fraktale Struktur derart, dass auf verschiedenen Längenskalen Unebenheiten, Rauhigkeiten und Welligkeiten auftreten. Die Unebenheiten besitzen typische Dimensionen, die ein Ortsfrequenzspektrum vom mm-über den $\mu$m- bis zum nm-Bereich aufspannen. Durch die genannte hierarchische Strukturierung und Sub-Strukturierung der Vorsprünge wird die erfindungsgemäß strukturierte Oberfläche optimal an die reale Oberfläche angepasst. Für jeden Teil des Ortsfrequenzspektrums der Unebenheiten des angrenzenden Körpers liefert die erfindungsgemäße strukturierte Oberfläche eine sich an den Oberflächenverlauf des angrenzenden Körpers passende Kontaktstruktur.

Besonders vorteilhaft ist es, wenn die hierarchische Struktur mindestens drei Strukturebenen umfasst, bei der die Stirnflächen der Vorsprünge auf der strukturierten Oberfläche jeweils Feinstruktur-Vorsprünge tragen, deren Stirnflächen mit Substrukturen ausgestattet sind. Wenn die Substrukturen-Vorsprünge eine Dicke im Bereich von 5 nm bis 200 nm besitzen, werden die Feinstruktur-Vorsprünge vorzugsweise mit einem 10-bis 100-fach größeren Dickenwert und die (Haupt-)Vorsprünge wiederum mit einem 10- bis 100-fach höheren Dickenwert gebildet. Bei der Einstellung dieser geometrischen Parameter wird die strukturierte Oberfläche optimal angepasst.

Gemäß einem wichtigen Gesichtspunkt der Erfindung werden die Feinstruktur- und/oder Substruktur-Vorsprünge mit einem elektrostatischen Beflockungsverfahren hergestellt, das an sich aus der Textilindustrie bekannt ist (siehe zum Beispiel EP 158 721, DD 156 825). Die Anwendung dieses Verfahrens besitzt den besonderen Vorteil, dass die Strukturierung mit einer hohen Genauigkeit und Reproduzierbarkeit realisiert werden kann.

Wenn gemäß einer weiteren Ausführungsform der Erfindung die Vorsprünge, deren freie Enden die Kontaktfläche der Haftstruktur bilden, verschiedenartige Vorsprünge umfassen, die eine Verteilung von verschiedenen Formen, Materialien, Elastizitätseigenschaften und/oder Größen der Vorsprünge darstellen, kann durch diese Variabilität vorteilhafterweise eine universal an jeder Oberfläche haltende Haftstruktur gebildet werden.

Die Strukturierung kann erfindungsgemäß integral in der Oberfläche eines Objekts oder integral mit einem schichtförmigen Träger durch eine Mikrostrukturierungstechnik gebildet sein. Im letzteren Fall wird der Träger adhärent, z. B. durch eine erfindungsgemäß modifizierte Oberfläche vermittelt oder durch einen Klebstoff auf einem Objekt fixiert.

Erfindungsgemäß können die Vorsprünge oder zumindest die Stirnflächen zur Erhöhung der Adhäsionsfähigkeit der Mikrokontakte durch chemische Modifizierung der Stirnflächen und/oder Aufbringung eines zusätzlichen Klebstoffs oder einer Flüssigkeit mit Oberflächenspannung (Kapillarkraft) modifiziert sein.

Ein besonderer Vorteil der Erfindung besteht darin, dass keine Beschränkungen in Bezug auf die Art der modifizierten Festkörperoberflächen besteht. So können die erfindungsgemäßen Kontaktflächen insbesondere in Polymermaterialien, Metallen, Legierungen, Halbleitern, dielektrischen Festkörpern oder Keramiken gebildet werden.

Ein weiterer Gegenstand der Erfindung ist ein Verfahren zur Herstellung einer Verbindung zwischen zwei Objekten, von denen mindestens ein Objekt in mindestens einem Teilbereich seiner Oberfläche entsprechend dem oben genannten Verfahren modifiziert worden ist. Dieses Verfahren zeichnet sich dadurch aus, dass die an dem mindestens einem Objekt gebildete Kontaktfläche in Verbindung mit dem anderen Objekt gebracht wird. Im Unterschied zu herkömmlich modifizierten Oberflächen erfolgt diese Verbindung verankerungsfrei. Zwischen den Vorsprüngen wird keine mechanische Verankerung gebildet. Die Kontaktfläche des einen Objekts berührt eine Kontaktfläche oder eine unmodifizierte Oberfläche des anderen Objekts.

Ein weiterer Gegenstand ist die Bereitstellung einer strukturierten Oberfläche eines Festkörpers mit erhöhter Adhäsionsfähigkeit, die sich insbesondere durch die oben beschriebene Kontaktfläche aus einer Vielzahl von Mikrokontakten auszeichnet.

Die Erfindung besitzt die folgenden weiteren Vorteile. Die Adhäsionsfähigkeit von Kontaktflächen wird gegenüber herkömmlich modifizierten Oberflächen erheblich gesteigert. Es werden Haftfähigkeiten von bis zu $10^5$ N/m$^2$ (Radius Kugelkontakt 1 $\mu$m) oder bis zu $10^7$ N/m$^2$ (Radius Kugelkontakt 10 nm) erreicht. Erfindungsgemäß modifizierte Oberflächen ermöglichen rückstandsfreie, inerte Haftverbindungen, die sowohl in Mikrotechnologien als auch mit makroskopischen Gegenständen anwendbar sind. Die erfindungsgemäße Mikrostrukturierung kann mit an sich verfügbaren Strukturierungstechniken mit geringem Aufwand hergestellt werden.

Weitere Vorteile und Einzelheiten der Erfindung werden im Folgenden unter Bezug auf die beigefügten Zeichnungen beschrieben. Es zeigen:

Fig. 1:  eine schematische Illustration der erfindungsgemäßen Bildung einer Kontaktfläche,

Fig. 2:  eine Illustration zur theoretischen Beschreibung geneigter Vorsprünge einer erfindungsgemäß modifizierten Oberfläche,

Fig. 3:  Kurvendarstellungen zur Illustration optimierter Elastizitätseigenschaften erfindungsgemäß gebildeter Kontaktflächen,

Fign. 4 bis 10:  schematische Illustrationen wichtiger Merkmale erfindungsgemäß gebildeter Oberflächenstrukturen entsprechend verschiedenen Ausführungsformen der Erfindung,

Fign. 11 bis 13: schematische Schnittansichten verschiedener Ausführungsformen erfindungsgemäß strukturierter Oberflächen,

Fign. 14 bis 16: schematische Draufsichten verschiedener Gestaltungen von Kontaktflächen, und

Fig. 17: ein Werkzeug, das mit einer erfindungsgemäß modifizierten Oberfläche ausgestattet ist.

Theoretische Grundlagen

Im Folgenden wird die Erhöhung der Adhäsionsfähigkeit durch Bildung einer Vielzahl von Mikrokontakten am Beispiel halbkugelförmiger Stirnflächen beschrieben. Dies dient lediglich der Illustration der erfindungsgemäß erzielten Wirkung, stellt jedoch keine Beschränkung auf die modellmäßig verwendete Stirnflächengeometrie dar. Vielmehr können die Stirnflächen alternativ andere, insbesondere abgeplattete Gestaltungen besitzen, wie unten erläutert wird.

Die klassische Kontakttheorie beschreibt den Kontakt einer halbkugelförmigen Stirnfläche mit einem flachen, harten Substrat zunächst entsprechend der sogenannten Hertz-Gleichung gemäß:

$$d^3 = (12 \cdot RF) / E^* \tag{1}$$

Dabei ist R der Radius der Halbkugel, F die ausgeübte Druckkraft, E* ein mittlerer Elastizitätsmodul und d der Durchmesser des Mikrokontakts zwischen der halbkugelförmigen Stirnfläche und dem Substrat. Wenn Adhäsionseffekte zwischen dem Substrat und der Stirnfläche berücksichtigt werden, so ergibt sich eine modifizierte Gleichung entsprechend der sogenannten JKR-Theorie (Johnson, Kendall & Roberts, 1971):

$$d^3 = [(12 \cdot RF) / E^*]\{F + 3\pi R\gamma + [6\pi R\gamma F + (3\pi R\gamma)^2]^{1/2}\} \tag{2}$$

In dieser Gleichung ist zusätzlich die Adhäsionsenergie $\Upsilon$ berücksichtigt. Aus der JKR-Theorie ergibt sich eine endliche Ablösekraft gemäß der folgenden Gleichung

$$F_c = 3/2 \cdot \pi R\gamma \tag{3}$$

Die Gleichung (3) zeigt, dass die Adhäsionskraft $F_c$ überraschenderweise zum Umfang des Mikrokontakts proportional ist. Daraus folgt, dass eine Aufspaltung einer zunächst geschlossenen, unmodifizierten Oberfläche in eine Vielzahl von Mikrokontakten die Adhäsionskraft gemäß Gleichung (4) erhöht:

$$F'_c = (n)^{1/2} \cdot F_c \tag{4}$$

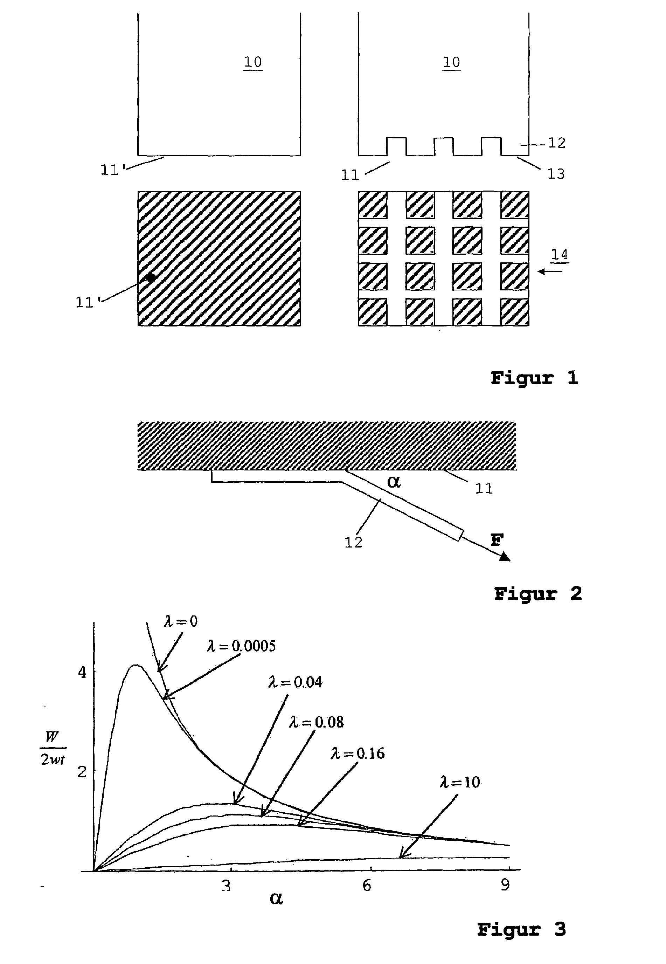

In Gleichung (4) ist n die Zahl der Mikrokontakte. Durch die Bildung von Mikrokontakten kann somit die Adhäsionskraft erhöht werden. Dieses Konzept, das auch als Adhäsionserhöhung durch Multiplizität von Mikrokontakten bezeichnet wird, ist in Fig. 1 schematisch illustriert.

Fig. 1 zeigt im linken Teil ein Objekt 10 in Seitenansicht (oben) und in Draufsicht auf die untere, unstrukturierte Oberfläche 11' (unten). Im rechten Teil von Fig. 1 ist die erfindungsgemäß vorgesehene Mikrostrukturierung der Oberfläche 11 zur Erzeugung einer Vielzahl von Vorsprüngen 12 illustriert. Jeder Vorsprung 12 bildet auf seiner vom Objekt 10 wegweisenden Seite eine Stirnfläche 13. Die Stirnflächen 13 bilden eine Vielzahl von Mikrokontakten. Die Mikrokontakte 13 bilden eine Kontaktfläche 14, die durch die Abstände zwischen den Stirnflächen 13 unterbrochen ist und entsprechend der oben ausgeführten Überlegungen eine erhöhte Adhäsionskraft im Vergleich zur unstrukturierten Oberfläche 11' besitzt.

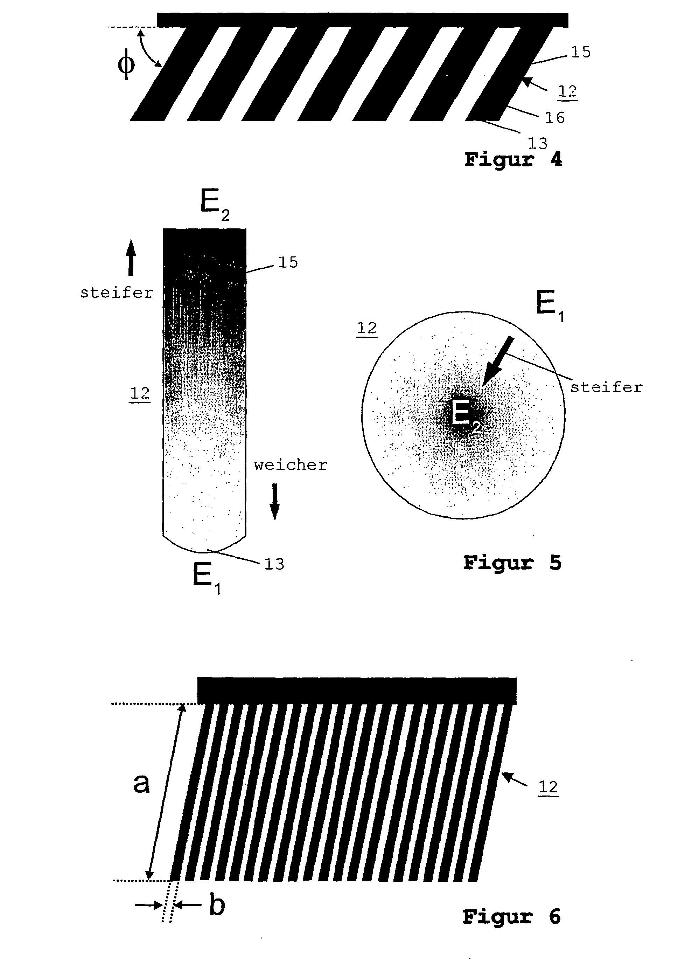

Die geometrischen Dimensionen der Vorsprünge 12 sind vorzugsweise wie folgt gewählt: Abstände der Stirnflächen: 1 nm bis 10 $\mu$m, insbesondere weniger als 5 $\mu$m (z. B. 4 $\mu$m oder weniger), Querschnittsdimension der Stirnflächen (zumindest in Richtung der lateralen Hauptbelastung, siehe unten): 1 nm bis 5 $\mu$m, und Höhe: z. B. im $\mu$m-Bereich, je nach Anwendung und Strukturierungstechnik. Verschiedene Gestaltungsformen der Vorsprünge 12 sind unten unter Bezug auf die Figuren 4 bis 6 beispielhaft erläutert.

Eine weitere Verbesserung der Adhäsionskraft ergibt sich, wenn mit den Vorsprüngen 12 zusätzlich eine Scherkraft aufgebracht ist, wie im Folgenden unter Bezug auf die Figuren 2 und 3 erläutert wird.

Der Vorsprung 12 wird als weichelastisches Band betrachtet, das bei Kontaktbildung mit einem angrenzenden Körper gegenüber dessen Oberfläche 31um einen Winkel $\alpha$ geneigt ist. Die Ablösekraft F steht mit der van der Waals-Brucharbeit w gemäß Gleichung (5) in Beziehung:

$$wt\delta\alpha = F(1-\cos\alpha)\,\delta\alpha + (F^2/Eht)\,\delta\alpha \qquad (5)$$

In Gleichung 5 sind t die Breite des Bandes, h die Dicke des Bandes, E das Young-Modul (Elastizitäts-Modul) des verbogenen Teils und $\delta\alpha$ eine infinitesimal kleine Verbiegung des Vorsprungs 12. Die Dicke ist die Querschnittsdimension des Vorsprungs entsprechend der Neigungsausrichtung relativ zur Oberfläche. Die Lösung der quadratischen Gleichung (5) ergibt die Ablösekraft gemäß Gleichung (6):

$$F = 2wt \,/\{[(1-\cos\alpha)^2 + \lambda]^{1/2} + (1-\cos\alpha)\}, \text{ wobei } \lambda = 4w/Eh \qquad (6)$$

In Gleichung 6 stellt $\lambda$ einen Elastizitätsparameter dar, der von der Brucharbeit, dem Young-Modul und der Dicke h des Vorsprungs 12 abhängig ist. Ein besonderer Vorteil der Erfindung besteht in der Optimierbarkeit einer strukturierten Oberfläche in Bezug auf den Parameter $\lambda$ (siehe unten).

Die für die Adhäsion zwischen zwei sich berührenden Körpern interessierende Größe ist die vertikale Projektion der Kraft F, die gemäß Gleichung 7 darstellbar ist.

$$W = 2wt\sin\alpha \,/\{[(1-\cos\alpha)^2 + \lambda]^{1/2} + (1-\cos\alpha)\} \qquad (7)$$

Es zeigt sich, dass für die vertikale Ablösekraft W die Elastizität eine hohe Bedeutung insbesondere für kleine Dimensionen des Vorsprungs und für geringe Young-Module besitzt. Typische Parameter, die entsprechend biologischen Haftsystemen gewählt sind, betragen:

$$w \approx 10 \ldots 40 \text{ mJ/m}^2, \quad E \approx 1 \text{ MPa}, \quad h = 1 \text{ }\mu\text{m}, \quad \lambda \approx 0.04 \ldots 0.16$$

In Fig. 3 ist das Verhalten des Parameters W/wt in Abhängigkeit von verschiedenen Neigungswinkeln $\alpha$ illustriert. Für geringe Elastizitätsparameter $\lambda$ besteht eine starke Abhängigkeit der Ablösekraft vom Neigungswinkel. Für einen mittleren Bereich von ungefähr 0.04 bis 0.16 ist die Abhängigkeit vom Neigungswinkel relativ gering, d. h. die vertikale Ablösekraft ist nahezu konstant. Bei größeren $\lambda$-Werten verringert sich die Ablösekraft.

Erfindungsgemäß werden somit die Vorsprünge vorzugsweise mit einem derartigen $\lambda$-Parameter gebildet, dass die vertikale Ablösekraft möglichst winkelunabhängig ist. Dies führt vorteilhafterweise zu einer hohen Robustheit von Haftverbindungen. Eine hohe Robustheit äußert sich darin, dass die Kontaktfestigkeit unabhängig vom Winkel $\alpha$ ist und dass ein teilweises Auftrennen der Verbindung nicht automatisch zu einer vollständigen Trennung führt.

Da der Elastizitätsparameter $\lambda$ sowohl von der Dicke t des Vorsprungs als auch vom Young-Elastizitätsmodul abhängt, kann die Strukturierung je nach dem verwendeten Materialsystem und der Strukturgeometrie optimiert werden. Erfolgt beispielsweise die Strukturierung der Oberfläche eines harten Halbleitermaterials (z. B. Si) mit einem hohen E-Wert, so wird eine geringe Dicke t im nm-Bereich bevorzugt. Bei weicheren Materialien (Kunststoff) mit geringerem E-Wert kann die Dicke breiter im $\mu$m-Bereich gewählt sein.

Für praktische Anwendungen wird ein Neigungswinkel $\alpha$ = 20° bis 40°, insbesondere 30° bevorzugt, bei dem die vertikale Ablösekraft maximal ist. Dies entspricht einem Winkel gegenüber der Oberflächennormalen von 80° bis 50°, insbesondere 60°.

Ausführungsbeispiele erfindungsgemäß strukturierter Oberflächen

Figur 4 illustriert in schematischer, vergrößerter Schnittansicht eine erfindungsgemäß gebildete Oberflächenstruktur, bei der eine Vielzahl von geneigten Vorsprüngen 12 jeweils mit einem Fußteil 15 vorgesehen sind, dessen freies Ende ein Kopfteil 16 mit einer Stirnfläche 13 bildet. Die Neigung der Vorsprünge 12 ist für die Haftung der Strukturen an technischen Oberflächen (Oberflächen mit fraktaler Rauhigkeit) von großer Bedeutung, da die Vorsprünge im geneigten Zustand eine höhere Nachgiebigkeit zeigen und weniger Energie zur Verbiegung erfordern (Minimierung der gespeicherten elastischen Energie). Im Unterschied zu geraden Vorsprüngen, die bei herkömmlichen Haftstrukturen vorgesehen sind, wird der hohe Energieverbrauch, der bei einer Stauchung einer geraden Struktur erforderlich wäre, vermieden.

Der Neigungswinkel $\phi$ wird beispielsweise im Bereich von 45° bis 89°, insbesondere 60° bis 80° gewählt.

Erfindungsgemäß ist in den Vorsprüngen 12 ein Elastizitätsgradient gebildet, dessen Varianten in Figur 5 illustriert sind. Gemäß dem linken Teilbild von Figur 5 wird die Biegefähigkeit vom Fußteil 15 hin zur Stirnfläche 13 stufenlos vermindert.

Dies wird durch die Einstellung eines Elastizitätsmoduls $E_2$ am Fußteil von z. B. 2 GPa erreicht, der sich bis zur Stirnfläche 13 zu einem Wert von z. B. 20 kPa vermindert. Entsprechend wird das Material (z. B. Polymer) entlang dem Vorsprung 12 hin zu seinem freien Ende (Stirnfläche 13) weicher oder in umgekehrter Richtung steifer. Alternativ oder zusätzlich ist gemäß dem rechten Teilbild von Figur 5 ein radialer Gradient vorgesehen, mit dem ebenfalls die elastische Energie beim Verbiegen der Vorsprünge 12 vermindert werden kann. Beispielsweise ist der Vorsprung 12, der im rechten Teilbild von Figur 5 in vergrößerter Schnittansicht mit einem runden Querschnitt gezeigt ist, im Innern mit einem Elastizitätsmodul $E_2$ von z. B. 2 GPa gebildet, der sich nach außen zur lateralen Oberfläche des Vorsprungs 12 zu einem Wert $E_1$ von z. B. 20 kPa vermindert.

In Figur 6 sind weitere Merkmale erfindungsgemäßer Strukturen mit geneigten Vorsprüngen 12 mit einer optimierten Biegesteifigkeit gezeigt. Wenn ein hohes Aspektverhältnis (Quotient aus Länge a der Vorsprünge 12 und deren Breite in Neigungsrichtung oder Durchmesser b) von mindestens 5 wird, wird die zur Biegebelastung erforderliche elastische Energie vermindert. Die Parameter a und b werden vorzugsweise aus den folgenden Bereichen ausgewählt: a: 2000 nm bis 200 $\mu$m, b:20 nm bis 10 $\mu$m.

Der reziproke Wert des Aspektverhältnis a/b bestimmt wesentlich auch der sogenannte effektive elastische Modul $E^* = E \cdot N \, b^2 \cdot (b/a)^2$, wobei E der Elastizitätsmodul des Materials der Vorsprünge 12 und N die Flächendichte der Kontaktstrukturen ist. Die Flächendichte beträgt z. B. $10^6$ bis $10^7$ cm$^{-2}$. Der Elastizitätsmodul z.B. von Polyamid beträgt 2 GPa. Die Größe $E^*$ wird vorzugsweise im Bereich von 20 kPa bis 10 MPa eingestellt.

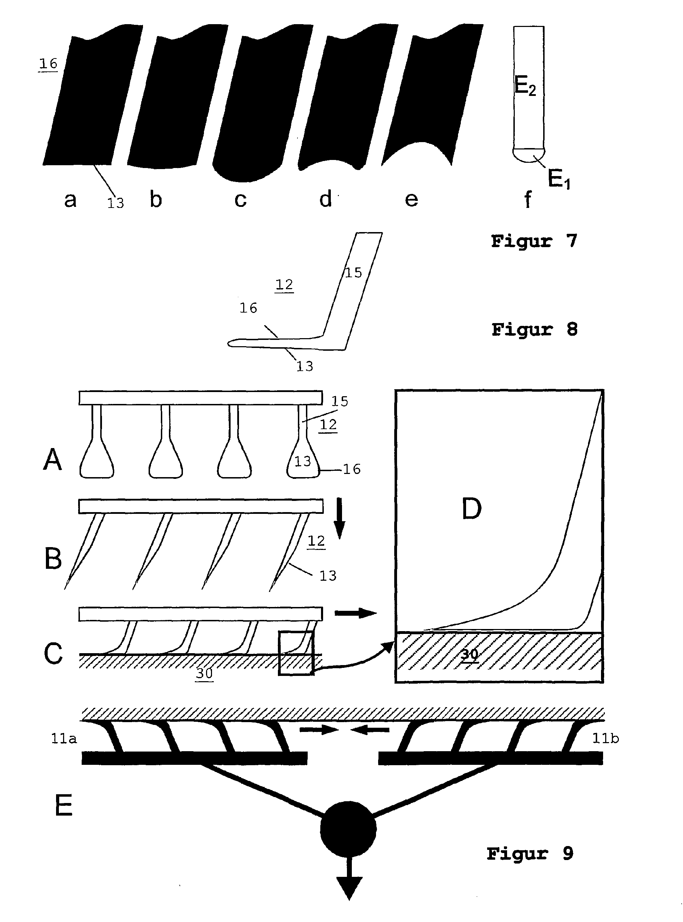

Figur 7 zeigt neben der ebenen Stirnfläche 13 (Teilbild a, entsprechend Figur 4) Varianten der Kopfteile 16 mit Stirnflächenformen, die als Halbkugel (Teilbilder b, c, f), Zylinder oder Torus (Teilbild d) oder Napfform (Teilbild e) beschrieben werden können. Die Durchmesser der Vorsprünge 12 liegen beispielsweise im Bereich von 20 nm bis 20 $\mu$m, wobei die Krümmungsradien bei den Teilbildern b und c im Bereich von 5 mm bis zum halben Durchmesser des Vorsprungs gewählt sind. Bei Teilbild a ist ein unendlich großer Krümmungsradius gegeben. Die Zylinder- oder Torusformen (Teilbild d) zeichnen sich durch eine konkave Ausformung der Stirnfläche mit einem verminderten Durchmesser aus, der beispielsweise 1/10 des Durchmessers des jeweiligen Vorsprungs ist. Die Napfform (Teilbild e) bedeutet, dass die Stirnfläche 13 eine Vertiefung mit einem gekrümmten oder nahezu rechteckigen Querschnitt besitzt.

In Teilbild f von Figur 7 ist ein mehrkomponentiger Aufbau des Kopfteils 16 eines Vorsprungs 12 illustriert. Das Kopfteil 16 besitzt ein höherer Elastizitätsmodul $E_2$ (z.B. von 10 MPa bis 10 GPa), während die Stirnfläche 13 aus einem Material mit einem verminderten Elastizitätsmodul $E_1$ (z.B. im Bereich von 20 kPa bis 10 MPa) gebildet ist. Vorteilhafterweise stellt auch dieser zweikomponentige Aufbau eine Ausführungsform einer Oberflächenstruktur mit einem sich hin zum freien Ende des Vorsprungs verringernden Elastizitätsmodul dar.

Figur 8 illustriert in schematischer Seitenansicht (senkrecht zur Neigungsrichtung) eine Ausführungsform eines Vorsprungs 12, bei dem das Kopfteil 16 mit der Kontaktfläche 13 durch eine im Kontaktzustand abgewinkelte Membran oder Lamelle gebildet wird, die aus dem Fußteil 15 mit einer verminderten Dicke und gegebenenfalls mit einer erhöhten Breite (siehe auch Figur 9A) hervorgeht. Das membranförmige Kopfteil 16 besitzt den Vorteil einer asymmetrischen Haltekraft (siehe unten Figur 9). Der Elastizitätsmodul des Kopfteils 16 wird im Bereich von 10 MPa bis 4 GPa eingestellt.

Figur 9 illustriert eine Ausführungsform der Erfindung, die wegen der Ausbildung der asymmetrischen Haltekraft für technologische Anwendungen eine hohe Relevanz besitzt. Es wird eine hohe Haftkraft erreicht, die dennoch mit geringem Aufwand lösbar ist, was für sog. "Pick-and-Place"-Anwendungen von Bedeutung ist. Die Teilbilder A und B zeigen Seitenansichten der erfindungsgemäßen Oberflächenstrukturierung mit den Vorsprüngen 12 parallel (A) oder senkrecht (B) zur Neigungsrichtung. Ausgehend von den Fußteilen 15 besitzen die Kopfteile 16 eine Membran- oder Lamellenform mit einer Breite im Bereich von 20 nm bis 1000 nm und einer Dicke im Bereich von 5 nm bis 100 nm. Die Abstände der einzelnen Vorsprünge 12 wird anwendungsabhängig und je nach Einstellung der Breite der Kopfteile 16 gewählt.

Ohne Kontakt an den angrenzenden Körper stehen die Vorsprünge 12 mit der gewünschten Neigung in den Raum (Teilbilder A, B). Wenn ein Kontakt hergestellt wird, werden die Kopfteile 16 abgebogen (Teilbilder C, D). Durch die vorgegebene Neigung der Vorsprünge 12 werden alle Kopfteile 16 in die gleiche Richtung abgebogen. Der Adhäsionskontakt wird zwischen den Stirnflächen 13 und dem angrenzenden Körper 30 gebildet. Die Haltekraft einer derartig abgewinkelten Stirnfläche 13 ist bei Belastung parallel oder antiparallel zur Ausrichtung der Kopfteile 16 verschieden. Die verschieden großen Haltekräfte bei verschieden gerichteten Belastungen ermöglichen den Aufbau einer Haftstruktur mit erhöhter Haltekraft, die schematisch in Teilbild E der Figur 9 gezeigt ist.

Wenn als Haltestruktur zwei Oberflächenbereiche 11a, 11b (von einem Objekt oder von zwei getrennten Objekten) vorgesehen sind, in denen die Vorsprünge 12 relativ zueinander entgegengesetzt geneigt sind (siehe Pfeile), kann mit der Haltestruktur eine größere Masse 30 gehalten werden, als dies mit einer entsprechenden Haltestruktur gleicher Größe jedoch mit einheitlicher Neigung möglich wäre. Dies ergibt sich daraus, dass jeweils eine Haltestruktur die Tangentialkräfte der anderen Haltestruktur kompensiert.

Analog zur Darstellung gemäß 9E können erfindungsgemäß mehr Haltestrukturen entgegengesetzt spiegelsymmetrisch vorgesehen sein, z. B. vier, sechs oder mehr. Bei entsprechender Formung der Stirnflächen 13 können analog Haftstrukturen mit ungeraden Zahlen von Haltestrukturen gebildet werden, bei denen sich die Tangentialkräfte entsprechend kompensieren.

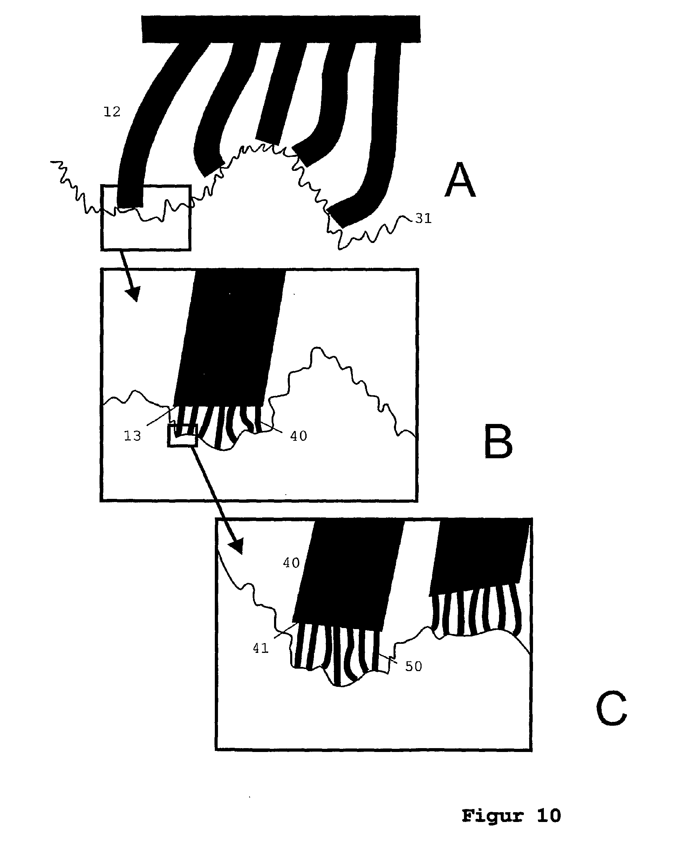

Figur 10 illustriert die hierarchische Bildung von Fein- und Substrukturen an den Vorsprüngen 12 einer erfindungsgemäß strukturierten Oberfläche. Teilbild A zeigt schematisch beispielhaft eine reale Oberfläche 31 mit Unregelmäßigkeiten auf verschiedenen Größenskalen. Für eine optimale Anhaftung in allen Größenbereichen tragen die Vorsprünge 12 entsprechend der vergrößerten Ausschnittsdarstellung in Teilbild B Feinstruktur-Vorsprünge 40, deren Feinstruktur-Stirnflächen 41 wiederum Substruktur-Vorsprünge 50 (Teilbild C) tragen. Dieses Prinzip kann erfindungsgemäß zu weiteren Unterstrukturen fortgesetzt werden.

Allgemein werden mit zunehmender Größe des Objektes, das an realen Oberflächen haften soll, mehr Hierarchieebenen der Unterstrukturierung eingeführt. Die in der vorliegenden Patentanmeldung zur Charakterisierung der Vorsprünge 12 beschriebenen Merkmale können entsprechend bei der Realisierung der Feinstruktur-Vorsprünge 40 bzw. der Substruktur-Vorsprünge 50 vorgesehen sein.

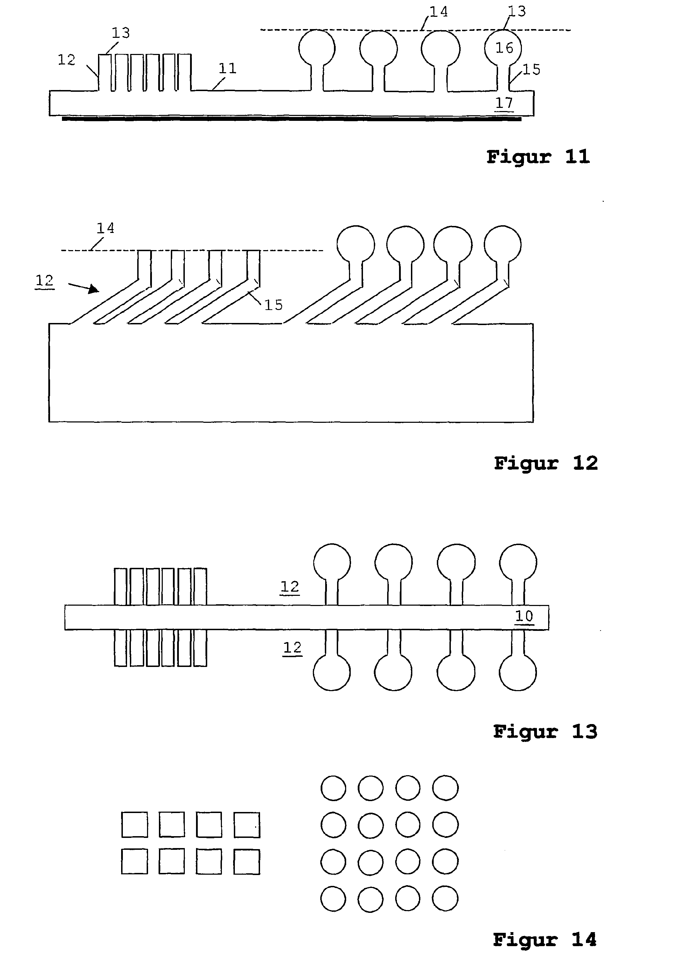

In den Figuren 11 bis 13 sind verschiedene Oberflächenstrukturen schematisch ausschnittsweise vergrößert dargestellt. Diese Darstellungen dienen lediglich der Illustration. Die Umsetzung der Erfindung ist nicht auf die gezeigten Geometrien beschränkt. Gemäß Fig. 11 sind auf der Oberfläche 11 des Objekts (Träger 17) beispielsweise stabförmige Vorsprünge 12 gebildet, die jeweils eine geradlinig (z. B. Rechteck, Quadrat, Polygon) oder gekrümmt umrandete Stirnfläche 13 besitzen. Die Stirnfläche 13 kann insbesondere entsprechen den oben genannten Prinzipien abgeplattet oder gewölbt sein. Allgemein bestehen die Vorsprünge 12 jeweils aus einem Fußteil 15 und einem Kopfteil 16, auf dessen vom Objekt 10 wegweisenden Seite die Stirnfläche 13 gebildet ist (siehe rechter Teil von Fig. 11). Die in gleicher Höhe über der Oberfläche 11 gebildeten Stirnflächen 13 bilden die erfindungsgemäße Kontaktfläche 14.

Das Objekt ist allgemein ein Festkörper, der z. B. Teil eines Gebrauchsgegenstandes ist. Das Objekt kann wie dargestellt die Gestalt eines schichtförmigen Trägers besitzen, der aus einem flexiblen Material (z. B. Kunststoff) besteht. Auf der zur Oberflächenstrukturierung entgegengesetzten Seite des Trägers kann eine zusätzliche herkömmliche Klebstoffschicht (siehe Fig. 11) oder erfindungsgemäße (siehe Fig. 13) Oberflächenmodifizierung vorgesehen sein.

Fig. 12 illustriert, dass die Fußteile 15 erfindungsgemäß gebildeter Vorsprünge 12 zumindest in Teilen gegenüber der Oberfläche 11 geneigt ausgerichtet sein können, um die oben erläuterten Schereigenschaften bereit zu stellen. Die Neigung kann sich auf einen unteren Teil der Fußteile 15 beschränken, so dass die Vorsprünge in geringer Höhe geneigt und in Nähe der Kontaktfläche 14 vertikal ausgerichtet sind.

Fig. 13 zeigt, dass erfindungsgemäß allgemein die Vorsprünge 12 und das Objekt 10 (z. B. schichtförmiger Träger) als Komposit aus verschiedenen Materialien hergestellt sein können.

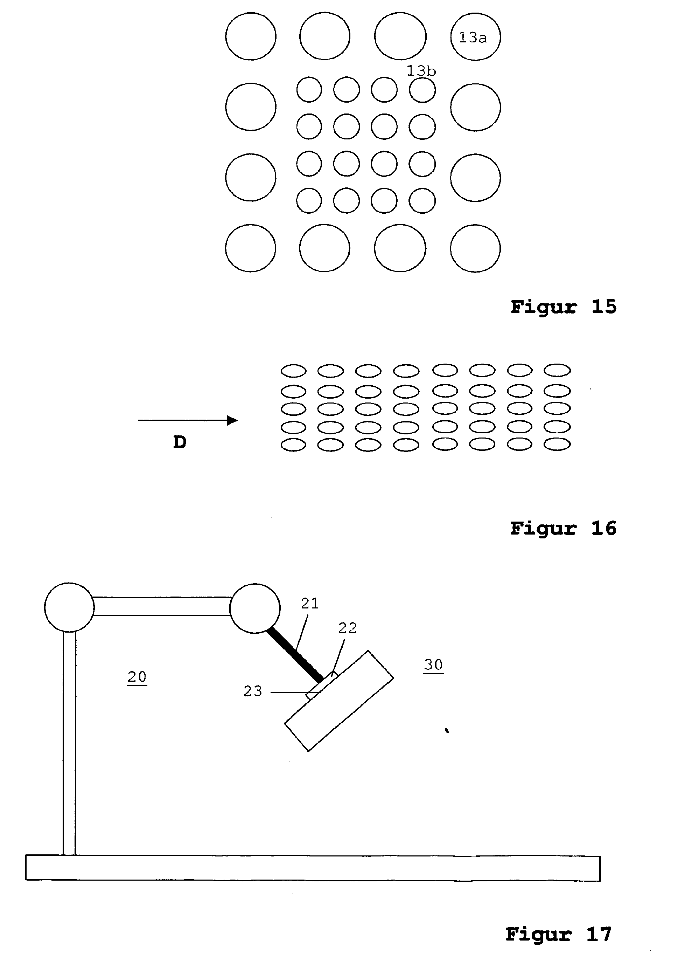

Die erfindungsgemäß gebildeten Stirnflächen oder Mikrokontakte 13 können je nach Anwendung in ihren geometrischen Eigenschaften modifiziert werden. In Fig. 14 sind beispielhaft quadratische und runde Stirnflächen 13 illustriert. Fig. 15 zeigt, dass eine Kontaktfläche (parallel zur Zeichenebene) durch Stirnflächen 13a, 13b mit verschiedenen Dimensionen und/oder Geometrien gebildet werden können. Beispielsweise können Teile der Kontaktfläche mit einer geringeren Ablösekraft ausgestattet sein, um ein erstes Aufbrechen der Haftverbindung zu erleichtern, während andere Teile eine stärkere Ablösekraft erfordern. Diese kann ggf. nach einem ersten Aufbruch leichter manuell oder mit einem Werkzeug aufgebracht werden.

Falls die Gefahr einer Auftrennung der Haftverbindung (Abzug) in einer Vorzugsrichtung gegeben ist, kann eine Geometrie gemäß Fig. 16 vorgesehen sein. Quer zur Richtung der Delamination D sind die Stirnflächen 13 vorzugsweise mit einem geringeren Abstand gebildet als parallel zur Richtung D. Des Weiteren sind die Stirnflächen entsprechend geformt.

Weitere Abwandlungen erfindungsgemäß strukturierter Oberflächen, die einzeln oder in Kombination mit den oben genannten Ausführungsformen vorgesehen sein können, werden im Folgenden genannt. Erstens kann die Oberfläche des Festkörpers gekrümmt sein. Es können auf einer Oberfläche mehrere Kontaktflächen wie Inseln oder mit bestimmten geometrischen Umrandungen vorgesehen sein. Die Vorsprünge können mit verschiedenen Dicken der Fußteile gebildet sein, so dass sich innerhalb einer Kontaktfläche Gradienten der Ablösekraft ergeben. Gradientenkontakte besitzen den besonderen Vorteil einer ortsabhängig elastischen Verformung. Die Mikrokontakte müssen nicht regelmäßig, sondern können unregelmäßig, z. B. meanderförmig, als Labyrinth oder statistisch verteilt angeordnet sein.

Die Vorsprünge 12 werden vorzugsweise nach einem der folgenden an sich bekannten Verfahren hergestellt:

- Mikro- oder Nanolithografie der zu modifizierenden Oberflächen,
- Mikro-Printing,
- Wachstum von Vorsprüngen durch Selbstorganisation,
- Strukturierungstechniken, wie sie von der Bildung sogenannter Quantendots bekannt sind,
- Mikro-Funkenerosion (bei metallischen Oberflächen), Mikro-EDM,
- Oberflächenbearbeitung mittels Ionenstrahl (fokussiert), und
- sogenanntes Rapid Prototyping mit Laserstrahlen (Pulver- oder Polymermaterialien).

Die Herstellung erfindungsgemäßer Strukturen und insbesondere hierarchischer Strukturen gemäß Figur 10 ist grundsätzlich durch Abgießen einer geeigneten Form möglich. Alternativ dazu ist insbesondere zur Herstellung hierarchischer Strukturen gemäß Figur 10 eine Kombination der folgenden Technologien möglich:

- Herstellung einer Form für die erste Hierarchieebene (Vorsprünge 12):

    a1. Laserstrukturierung von Metalloberflächen (bis 100 $\mu$m)
    (oder alternativ: a2. Lithographische Strukturierung von Photoresist auf einer Si-Oberfläche und anschließende Tiefenätzung durch Boschprozess)
    b. Abgießen der Strukturen mit Polymeren (z. B.:Polydimethylsiloxan,
    oder Polyvinylsiloxan)

- Beschichtung der Oberflächenelemente mit Klebstoff,
- Beflockung der Oberflächen durch einen elektrostatischen FLOCK-Prozess von Textilfasern (z.B.: Polyamid: Durchmesser 10 $\mu$m, Länge 1 mm), und
- Erzeugung von nachgiebigen Kontaktflächen durch Scherung der Strukturen über einer temperierten Oberfläche oder durch Abscheidung einer dünnen Schicht gummielastischen Polymers.

Zur Scherung werden die freien Enden der Vorsprünge 12 einer thermischen Verformung unterzogen, die ein Kontaktieren aller freien Enden der Vorsprünge 12 mit einer erwärmten, vorzugsweise PTFE-beschichteten Oberfläche (150° - 270°C) und ein Ziehen über die erwärmte Oberfläche umfasst, so dass sich die freien Enden spachtelförmig verformen.

Die erfindungsgemäß gebildeten Strukturen bestehen bspw. aus Polymer (z. B. PMMA, PE, Polydimethylsiloxan, Polyvinylsiloxan, Polyamid), oder Metall (z. B. Ni, Cu, Au).

<u>Anwendungen</u>

Erfindungsgemäß modifizierte Oberflächen können als Haftflächen bei allen Techniken vorgesehen sein, bei denen lösbar Verbindungen zwischen verschiedenen Objekten hergestellt werden sollen. Dies betrifft sowohl Mikroobjekte (charakteristische Dimensionen im $\mu$m- und Sub-$\mu$m-Bereich) als auch makroskopische Gegenstände, wie z. B. Werkzeuge, Textilien, Papier und dgl. Erfindungsgemäße Verbindungen können Saug-, Klett- und Magnethalterungen ersetzen.

In Fig. 17 ist beispielhaft ein Werkzeug 20 mit einem Manipulationsarm 21 und einem Haftgreifer 22 illustriert, an dem ein schematisch illustrierter Gegenstand 30 (z. B. Werkzeug) adhärent angebracht ist. Die Oberfläche 23 des Haftgreifers 22 ist entsprechend dem oben erläuterten Prinzipien mit einer Mikrostrukturierung ausgestattet, die die Verbindung mit dem Gegenstand 30 bewirkt.

Die in der vorliegenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

**Patentansprüche**

1. Verfahren zur Oberflächenmodifizierung eines Objektes (10), um die Adhäsionsfähigkeit des Objektes zu erhöhen, wobei die Oberfläche (11) einer Strukturierung unterzogen wird, so dass eine Vielzahl von Vorsprüngen (12) gebildet wird, die jeweils mit einem Fußteil (15) und einem Kopfteil gebildet werden, wobei der Kopfteil eine von der Oberfläche wegweisende Stirnfläche (13) besitzt und alle Stirnflächen (13) die gleiche senkrechte Höhe über der Oberfläche (11) besitzen und eine adhärente, durch gegenseitige Abstände zwischen den Stirnflächen (13) unterbrochene Kontaktfläche (14) bilden,
   **dadurch gekennzeichnet, dass**
   die Vorsprünge (12) elastisch und relativ zur Oberfläche geneigt aus einem Material gebildet werden, dessen Elastizität oder Biegesteifigkeit sich in wenigstens einer der Bezugsrichtungen verringert, die eine Längsrichtung jedes Vorsprungs (12) vom Fußteil (15) zum Kopfteil und eine Querrichtung jedes Vorsprungs axial von der Mitte des Fußteils (15) nach außen umfassen.

2. Verfahren nach Anspruch 1, bei dem
   die Vorsprünge (12) mit einer Flächendichte (N), einem Elastizitätsmodul (E), einer Länge (a) und einer Dicke (b) der Vorsprünge (12) elastisch und relativ zur Oberfläche geneigt aus einem Material so gebildet werden, dass ein effektives elastischer Modul (E*) mit $E^* = E \cdot N \cdot b^2 \cdot (b/a)^2$ einen Wert im Bereich von 20 kPa bis 10 MPa besitzt.

3. Verfahren nach Anspruch 1, bei dem die Vorsprünge (12) aus einem Material gebildet werden, dessen Elastizitätsmodul sich von einem oberen Elastizitätswert zu einem unteren Elastizitätswert verringert, wobei der obere Elastizitätswert im Bereich von 10 MPa bis 10 GPa und der untere Elastizitätswert im Bereich von 20 kPa bis 10 MPa gewählt ist.

4. Verfahren nach Anspruch 1 oder 2, bei dem die Fußteile (15) mit einem Winkel von 89° bis 45° relativ zur Oberfläche gebildet werden.

5. Verfahren nach Anspruch 3, bei dem die Fußteile (15) mit einem Winkel von 80° bis 60° gebildet werden.

6. Verfahren nach mindestens einem der vorhergehenden Ansprüche, bei dem die Vorsprünge (12) so gebildet werden, dass die gegenseitigen Abstände benachbarter Stirnflächen (13) kleiner als 10 µm sind.

7. Verfahren nach Anspruch 6, bei dem die Vorsprünge (12) so gebildet werden, dass die gegenseitigen Abstände benachbarter Stirnflächen (13) kleiner als 5 µm sind.

8. Verfahren nach mindestens einem der vorhergehenden Ansprüche, bei dem die Vorsprünge (12) so gebildet werden, dass die Stirnflächen (13) eine charakteristische Querschnittsdimension besitzen, die kleiner als 20 µm und größer als 20 nm ist.

9. Verfahren nach mindestens einem der vorhergehenden Ansprüche, bei dem die Vorsprünge (12) so gebildet werden, dass die Stirnflächen (13) wenigstens eine der gewölbten Stirnflächenformen aufweisen, die eine Halbkugelform, eine Zylinderform, eine Torusform oder eine Napfform umfassen.

10. Verfahren nach Anspruch 9, bei dem die geometrische Stirnflächenform mit einem vorbestimmten Stirnflächendurchmesser und einem Krümmungsradius gebildet wird, der im Bereich von 5 mm bis zur Hälfte des Stirnflächendurchmessers gewählt ist.

11. Verfahren nach mindestens einem der vorhergehenden Ansprüche 1 bis 8, bei dem die Vorsprünge (12) so gebildet werden, dass sich die Fußteile (15) in membranförmige Kopfteile (16) erweitern, deren Dicke geringer als die Dicke der Fußteile (15) ist.

12. Verfahren nach Anspruch 10, bei dem die membranförmigen Kopfteile (16) mit einer Länge und Breite, die im Bereich von 20 nm bis 1000 nm gewählt sind, und mit einer Dicke gebildet werden, die im Bereich von 5 nm bis 100 nm gewählt ist.

13. Verfahren nach Anspruch 11, bei dem die membranförmigen Kopfteile (16) mit einem Elastizitätsmodul gebildet werden, das geringer als der Elastizitätsmodul der Fußteile (15) und im Bereich von 10 MPa bis 2 GPa gewählt ist.

**14.** Verfahren nach mindestens einem der Ansprüche 10 bis 13, bei dem die membranförmigen Kopfteile (16) durch eine thermische Verformung der freien Enden der Vorsprünge (12) hergestellt werden.

**15.** Verfahren nach Anspruch 14, bei dem die thermische Verformung der Kopfteile ein Kontaktieren der freien Enden der Vorsprünge (12) mit einer erwärmten Oberfläche und ein Ziehen über die erwärmte Oberfläche umfasst.

**16.** Verfahren nach mindestens einem der vorhergehenden Ansprüche, bei dem die Vorsprünge (12) mit einer Länge (a) und einer Dicke (b)gebildet werden, so dass sich ein Aspektverhältnis (a/b) von mindestens 5:1 ergibt.

**17.** Verfahren nach mindestens einem der vorhergehenden Ansprüche, bei dem die Stirnflächen (13) einer Oberflächenmodifizierung nach einem der vorhergehenden Ansprüche unterzogen werden, so dass auf jeder Stirnfläche (13) jeweils eine Vielzahl von Feinstruktur-Vorsprüngen (40) jeweils mit Feinstruktur-Stirnflächen (41) gebildet sind.

**18.** Verfahren nach Anspruch 17, bei dem die Feinstruktur-Stirnflächen (41) jeweils einer Oberflächenmodifizierung nach einem der vorhergehenden Ansprüche unterzogen werden, so dass jeweils Substruktur-Vorsprünge (50) gebildet werden.

**19.** Verfahren nach Anspruch 18, bei dem die Substruktur-Vorsprünge mit einer Dicke im Bereich von 5 nm bis 200 nm gebildet werden, wobei die Feinstruktur-Vorsprünge (40) mit einer Dicke gebildet werden, die gleich dem 10-fachen bis 100-fachen Wert der Dicke der Substruktur-Vorsprünge (50) ist, und die Vorsprünge (12) mit einer Dicke gebildet werden, die gleich dem 10-fachen bis 100-fachen Wert der Dicke der Feinstruktur-Vorsprünge (40) ist.

**20.** Verfahren nach Anspruch 18, bei dem die Substruktur-Vorsprünge (50) jeweils mindestens einer weiteren Oberflächenmodifizierung nach einem der vorhergehenden Ansprüche unterzogen werden.

**21.** Verfahren nach einem der vorhergehenden Ansprüche 17 bis 20, bei dem die Feinstruktur- oder Substruktur-Vorsprünge (40, 50) mit einem elektrostatischen Beflockungsverfahren hergestellt werden.

**22.** Verfahren nach mindestens einem der vorhergehenden Ansprüche, bei dem die Kontaktfläche (14) mit einem Elastizitätsgradienten hergestellt wird.

**23.** Verfahren nach mindestens einem der vorhergehenden Ansprüche, bei dem die Vorsprünge (12), deren Kopfteile (16) die Kontaktfläche (14) bilden, verschiedenartige Vorsprünge (12) umfassen, die eine Verteilung von verschiedenen Formen, Materialien, Elastizitätseigenschaften und/oder Größen der Vorsprünge darstellen.

**24.** Verfahren nach mindestens einem der vorhergehenden Ansprüche, bei dem die Strukturierung die Bildung der Vorsprünge auf einem schichtförmigen Träger (17) umfasst, der auf der Oberfläche des Objektes (10) fixiert wird.

**25.** Verfahren nach mindestens einem der vorhergehenden Ansprüche, bei dem die Adhäsion der Vorsprünge (12) und/oder der Stirnflächen (13) durch chemische Modifizierung oder Aufbringung eines Klebstoffs erhöht wird.

**26.** Verfahren nach mindestens einem der vorhergehenden Ansprüche, bei dem die Vorsprünge (12) aus einem Polymer, Metall, oder einer Legierung gebildet werden.

**27.** Verfahren zur Herstellung einer Verbindung zwischen zwei Objekten, von denen mindestens ein Objekt in mindestens einem Teil seiner Oberfläche mit einem Verfahren nach mindestens einem der vorhergehenden Ansprüche modifiziert worden ist, wobei die beiden Objekte so in Kontakt gebracht werden, das die Kontaktfläche des modifizierten Objektes das andere Objekt berührt.

**28.** Verfahren nach Anspruch 27, bei dem mindestens eines der Objekte in mindestens zwei Teilen seiner Oberfläche oder mindestens zwei Teil-Objekte jeweils in einem Teil ihrer Oberfläche so modifiziert sind, dass die Vorsprünge (12) jeweils mit entgegengesetzter Ausrichtung relativ zur Kontaktfläche geneigt sind.

**29.** Strukturierte Oberfläche eines Festkörpers mit erhöhter Adhäsionsfähigkeit, wobei die Oberfläche (11) eine Strukturierung aufweist, die eine Vielzahl von Vorsprüngen (12) umfasst, die jeweils mit einem Fußteil und einem Kopfteil aufweisen, wobei der Kopfteil eine von der Oberfläche wegweisende Stirnfläche (13) besitzt,
**dadurch gekennzeichnet, dass**
die Vorsprünge (12) elastisch und relativ zur Oberfläche geneigt sind und aus ein Material aufweisen, dessen Elastizität oder Biegesteifigkeit sich in wenigstens einer der Bezugsrichtungen verringert, die eine Längsrichtung jedes Vorsprungs (12) vom Fußteil (15) zum Kopfteil und eine Querrichtung jedes Vorsprungs axial von der Mitte des Fußteils (15) nach außen umfassen.

30. Strukturierte Oberfläche nach Anspruch 29, bei der die Vorsprünge (12) mit einer Flächendichte (N), einem Elastizitätsmodul (E), einer Länge (a) und einer Dicke (b) elastisch und relativ zur Oberfläche geneigt angeordnet sind und ein Material umfassen, dessen effektives elastisches Modul (E*) mit $E^* = E \cdot N\, b^2 \cdot (b/a)^2$ einen Wert im Bereich von 20 kPa bis 10 MPa besitzt.

31. Strukturierte Oberfläche nach Anspruch 29, bei der die Vorsprünge (12) ein Material umfassen, dessen Elastizitätsmodul sich von einem oberen Elastizitätswert zu einem unteren Elastizitätswert verringert, wobei der obere Elastizitätswert im Bereich von 10 MPa bis 10 GPa und der untere Elastizitätswert im Bereich von 20 kPa bis 10 MPa enthalten ist.

32. Strukturierte Oberfläche nach mindestens einem der Ansprüche 29 bis 31, bei der die Fußteile (15) einen Winkel von 89° bis 45° relativ zur Oberfläche aufweisen.

33. Strukturierte Oberfläche nach Anspruch 32, bei der die Fußteile (15) einen Winkel von 80° bis 60° relativ zur Oberfläche aufweisen.

34. Strukturierte Oberfläche nach mindestens einem der vorhergehenden Ansprüche 29 bis 33, bei der die gegenseitigen Abstände benachbarter Stirnflächen (13) kleiner als 10 μm sind.

35. Strukturierte Oberfläche nach Anspruch 34, bei der die gegenseitigen Abstände benachbarter Stirnflächen (13) kleiner als 5 μm ist.

36. Strukturierte Oberfläche nach mindestens einem der vorhergehenden Ansprüche 29 bis 35, bei der die Stirnflächen (13) eine charakteristische Querschnittsdimension besitzen, die kleiner als 20 μm und größer als 20 nm ist.

37. Strukturierte Oberfläche nach mindestens einem der vorhergehenden Ansprüche 29 bis 36, bei der die Stirnflächen (13) wenigstens eine der gewölbten Stirnflächenformen aufweisen, die eine Halbkugelform, eine Zylinderform, eine Torusform oder eine Napfform umfassen.

38. Strukturierte Oberfläche nach Anspruch 37, bei der die Stirnflächenform einen vorbestimmten Stirnflächendurchmesser und einen Krümmungsradius aufweisen, der im Bereich von 5 mm bis zur Hälfte des Stirnflächendurchmessers gewählt ist.

39. Strukturierte Oberfläche nach mindestens einem der vorhergehenden Ansprüche 29 bis 35, bei der sich die Fußteile (15) der Vorsprünge (12) in membranförmige Kopfteile (16) erweitern, deren Dicke geringer als die Dicke der Fußteile (15) ist.

40. Strukturierte Oberfläche nach Anspruch 39, bei der die membranförmigen Kopfteile (16) eine Länge und Breite, die im Bereich von 20 nm bis 1000 nm gewählt sind, und eine Dicke aufweisen, die im Bereich von 5 nm bis 100 nm gewählt ist.

41. Strukturierte Oberfläche nach Anspruch 39, bei der die membranförmigen Kopfteile (16) ein Elastizitätsmodul aufweisen, das geringer als der Elastizitätsmodul der Fußteile (15) und im Bereich von 10 MPa bis 2 GPa gewählt ist.

42. Strukturierte Oberfläche nach mindestens einem der vorhergehenden Ansprüche 29 bis 41, bei der die Vorsprünge (12) eine Länge (a) und die Stirnflächen (13) die charakteristischen Querschnittsdimension (b) derart aufweisen, dass sich ein Aspektverhältnis (a/b) von mindestens 5:1 ergibt.

43. Strukturierte Oberfläche nach mindestens einem der vorhergehenden Ansprüche 29 bis 42, bei der die Stirnflächen (13) jeweils eine Vielzahl von Feinstruktur-Vorsprüngen (40) aufweisen jeweils Feinstruktur-Stirnflächen (41) aufweisen.

44. Strukturierte Oberfläche nach Anspruch 43, bei der die Feinstruktur-Stirnflächen (41) jeweils Substruktur-Vorsprünge (50) aufweisen.

**45.** Strukturierte Oberfläche nach Anspruch 43, bei der die Substruktur-Vorsprünge eine Dicke im Bereich von 5 nm bis 200 nm aufweisen, wobei die Feinstruktur-Vorsprünge (40) eine Dicke aufweisen, die gleich dem 10-fachen bis 100-fachen Wert der Dicke der Substruktur-Vorsprünge (50) ist, und die Vorsprünge (12) eine Dicke aufweisen, die gleich dem 10-fachen bis 100-fachen Wert der Dicke der Feinstruktur-Vorsprünge (40) ist.

**46.** Strukturierte Oberfläche nach mindestens einem der vorhergehenden Ansprüche 29 bis 45, bei der die Kontaktfläche (14) einen Elastizitätsgradienten aufweist.

**47.** Strukturierte Oberfläche nach Anspruch 46, bei der die Vorsprünge (12), deren Kopfteile (16) die Kontaktfläche (14) bilden, verschiedenartige Vorsprünge (12) umfassen, die eine Verteilung von verschiedenen Formen, Materialien, Elastizitätsparametern und/oder Größen der Vorsprünge darstellen.

**48.** Strukturierte Oberfläche nach mindestens einem der vorhergehenden Ansprüche 29 bis 47, die einen schichtförmigen Träger (17) umfasst, der auf der Oberfläche des Objektes (10) fixiert ist.

**49.** Strukturierte Oberfläche nach mindestens einem der vorhergehenden Ansprüche 29 bis 48, bei der die Vorsprünge (12) ein Polymer, Metall, Legierung, Halbleiter oder eine Keramik umfassen.

**50.** Strukturierte Oberfläche nach mindestens einem der vorhergehenden Ansprüche 29 bis 49, bei der auf den Vorsprüngen (12) und/oder den Stirnflächen (13) eine chemische Modifizierung oder ein Klebstoff vorgesehen ist.

**51.** Festkörper, dessen Oberfläche zumindest teilweise eine strukturierte Oberfläche nach mindestens einem der Ansprüche 29 bis 49 ist.

**52.** Verbund aus zwei Festkörpern entlang einer Verbindungsfläche, von denen mindestens einer eine Oberfläche aufweist, die im Bereich der Verbindungsfläche zumindest teilweise eine strukturierte Oberfläche nach mindestens einem der Ansprüche 29 bis 49 ist.

**Claims**

**1.** Method for surface modification of an object (10) in order to increase the adhesion capacity of the object, the surface (11) being subjected to a structuring so that a multiplicity of projections (12) is formed which are formed respectively with a foot part (15) and a head part, the head part having an end face (13) which points away from the surface and all the end faces (13) having the same vertical height above the surface (11) and forming an adherent uninterrupted contact face (14) by means of mutual spacings between the end faces (13),
**characterised in that**
the projections (12) are formed elastically and inclined relative to the surface from a material, the elasticity or flexural strength of which is reduced in at least one of the reference directions which include a longitudinal direction of each projection (12) from the foot part (15) to the head part and a transverse direction of each projection axially from the centre of the foot part (15) to the outside.

**2.** Method according to claim 1, in which
the projections (12), with a surface density (N), a modulus of elasticity (E), a length (a) and a thickness (b) of the projections (12), are formed elastically and inclined relative to the surface from a material such that an effective elastic modulus ($E^*$), with $E^* = E \cdot N \cdot b^2 \cdot (b/a)^2$, has a value in the range of 20 kPa to 10 MPa.

**3.** Method according to claim 1, in which the projections (12) are formed from a material, the modulus of elasticity of which is reduced from an upper elasticity value to a lower elasticity value, the upper elasticity value being chosen in the range of 10 MPa to 10 GPa and the lower elasticity value in the range of 20 kPa to 10 MPa.

**4.** Method according to claim 1 or 2, in which the foot parts (15) are formed at an angle of 89° to 45° relative to the surface.

**5.** Method according to claim 3, in which the foot parts (15) are formed at an angle of 80° to 60°.

**6.** Method according to at least one of the preceding claims, in which the projections (12) are formed such that the mutual spacings of adjacent end faces (13) are smaller than 10 $\mu$m.

7. Method according to claim 6, in which the projections (12) are formed such that the mutual spacings of adjacent end faces (13) are smaller than 5 μm.

8. Method according to at least one of the preceding claims, in which the projections (12) are formed such that the end faces (13) have a characteristic cross-sectional dimension which is smaller than 20 μm and larger than 20 nm.

9. Method according to at least one of the preceding claims, in which the projections (12) are formed such that the end faces (13) have at least one of the arched end face shapes which include a hemispherical shape, a cylindrical shape, a toroidal shape or a bowl shape.

10. Method according to claim 9, in which the geometric end face shape is formed with a predetermined end face diameter and a radius of curvature which is chosen in the range of 5 mm up to half of the end face diameter.

11. Method according to at least one of the preceding claims 1 to 8, in which the projections (12) are formed such that the foot parts (15) widen into membrane-shaped head parts (16), the thickness of which is less than the thickness of the foot parts (15).

12. Method according to claim 10, in which the membrane-shaped head parts (16) are formed with a length and breadth which are chosen in the range of 20 nm to 1000 nm and with a thickness which is chosen in the range of 5 nm to 100 nm.

13. Method according to claim 11, in which the membrane-shaped head parts (16) are formed with a modulus of elasticity which is chosen less that the modulus of elasticity of the foot parts (15) and in the range of 10 MPa to 2 GPa.

14. Method according to at least one of the claims 10 to 13, in which the membrane-shaped head parts (16) are produced by means of a thermal deformation of the free ends of the projections (12).

15. Method according to claim 14, in which the thermal deformation of the head parts includes a contacting of the free ends of the projections (12) with a heated surface and drawing over the heated surface.

16. Method according to at least one of the preceding claims, in which the projections (12) are formed with a length (a) and a thickness (b) so that an aspect ratio (a/b) of at least 5 : 1 is produced.

17. Method according to at least one of the preceding claims, in which the end faces (13) are subjected to a surface modification according to one of the preceding claims so that on each end face (13) respectively a multiplicity of fine-structure projections (40) respectively with fine-structure end faces (41) is formed.

18. Method according to claim 17, in which the fine-structure end faces (41) are subjected respectively to a surface modification according to one of the preceding claims so that respectively substructure projections (50) are formed.

19. Method according to claim 18, in which the substructure projections are formed with a thickness in the range of 5 nm to 200 nm, the fine-structure projections (40) being formed with a thickness which is equal to 10 to 100 times the value of the thickness of the substructure projections (50) and the projections (12) are formed with a thickness which is equal to 10 to 100 times the value of the thickness of the fine-structure projections (40).

20. Method according to claim 18, in which the substructure projections (50) respectively are subjected at least to one further surface modification according to one of the preceding claims.

21. Method according to one of the preceding claims 17 to 20, in which the fine-structure or substructure projections (40, 50) are produced by an electrostatic flocking process.

22. Method according to at least one of the preceding claims, in which the contact face (14) is produced with an elasticity gradient.

23. Method according to at least one of the preceding claims, in which the projections (12), the head parts (16) of which form the contact face (14), include different types of projections (12), which represent a distribution of different shapes, materials, elasticity properties and/or sizes of the projections.

24. Method according to at least one of the preceding claims, in which the structuring includes the formation of the projections on a layer-shaped carrier (17) which is fixed on the surface of the object (10).

**25.** Method according to at least one of the preceding claims, in which the adhesion of the projections (12) and/or of the end faces (13) is increased by means of chemical modification or application of an adhesive.

**26.** Method according to at least one of the preceding claims, in which the projections (12) are formed from a polymer, metal or an alloy.

**27.** Method for producing a bond between two objects, of which at least one object has been modified in at least one part of its surface by a method according to at least one of the preceding claims, the two objects being brought into contact such that the contact face of the modified object touches the other object.

**28.** Method according to claim 27, in which at least one of the objects is modified in at least two parts of its surface or at least two partial objects respectively are modified in one part of their surface such that the projections (12) respectively are inclined with opposite orientation relative to the contact face.

**29.** Structured surface of a solid body with increased adhesion capacity, the surface (11) having a structuring which includes a multiplicity of projections (12) which respectively have a foot part and a head part, the head part having an end face (13) which points away from the surface,
**characterised in that**
the projections (12) are elastic and inclined relative to the surface and are made of a material, the elasticity or flexural strength of which is reduced in at least one of the reference directions which include a longitudinal direction of each projection (12) from the foot part (15) to the head part and a transverse direction of each projection axially from the centre of the foot part (15) to the outside.

**30.** Structured surface according to claim 29, in which the projections (12), with a surface density (N), a modulus of elasticity (E), a length (a) and a thickness (b), are disposed elastically and inclined relative to the surface and comprise a material, the effective elastic modulus (E*) of which, with $E^* = E \cdot N b2 \cdot (b/a)^2$, has a value in the range of 20 kPa to 10 MPa.

**31.** Structured surface according to claim 29, in which the projections (12) comprise a material, the modulus of elasticity of which is reduced from an upper elasticity value to a lower elasticity value, the upper elasticity value being contained in the range of 10 MPa to 10 GPa and the lower elasticity value in the range of 20 kPa to 10 MPa.

**32.** Structured surface according to at least one of the claims 29 to 31, in which the foot parts (15) have an angle of 89° to 45° relative to the surface.

**33.** Structured surface according to claim 32, in which the foot parts (15) have an angle of 80° to 60° relative to the surface.

**34.** Structured surface according to at least one of the preceding claims 29 to 33, in which the mutual spacings of adjacent end faces (13) are smaller than 10 $\mu$m.

**35.** Structured surface according to claim 34, in which the mutual spacings of adjacent end faces (13) are smaller than 5 $\mu$m.

**36.** Structured surface according to at least one of the preceding claims 29 to 35, in which the end faces (13) have a characteristic cross-sectional dimension which is smaller than 20 $\mu$m and larger than 20 nm.

**37.** Structured surface according to at least one of the preceding claims 29 to 36, in which the end faces (13) have at least one of the arched end face shapes which include a hemispherical shape, a cylindrical shape, a toroidal shape or a bowl shape.

**38.** Structured surface according to claim 37, in which the end face shapes have a predetermined end face diameter and a radius of curvature which is chosen in the range of 5 mm up to half of the end face diameter.

**39.** Structured surface according to at least one of the preceding claims 29 to 35, in which the foot parts (15) of the projections (12) widen into membrane-shaped head parts (16), the thickness of which is less than the thickness of the foot parts (15).

40. Structured surface according to claim 39, in which the membrane-shaped head parts (16) have a length and breadth which are chosen in the range of 20 nm to 1000 nm and have a thickness which is chosen in the range of 5 nm to 100 nm.

41. Structured surface according to claim 39, in which the membrane-shaped head parts (16) have a modulus of elasticity which is chosen less than the modulus of elasticity of the foot parts (15) and in the range of 10 MPa to 2 GPa.

42. Structured surface according to at least one of the preceding claims 29 to 41, in which the projections (12) have a length (a) and the end faces (13) have the characteristic cross-sectional dimension (b) such that an aspect ratio (a/b) of at least 5 : 1 is produced.

43. Structured surface according to at least one of the preceding claims 29 to 42, in which the end faces (13) respectively have a multiplicity of fine-structure projections (40) having respectively fine-structure end faces (41).

44. Structured surface according to claim 43, in which the fine-structure end faces (41) have respectively substructure projections (50).

45. Structured surface according to claim 43, in which the substructure projections have a thickness in the range of 5 nm to 200 nm, the fine-structure projections (40) having a thickness which is equal to 10 to 100 times the value of the thickness of the substructure projections (50) and the projections (12) having a thickness which is equal to 10 to 100 times the value of the thickness of the fine-structure projections (40).

46. Structured surface according to at least one of the preceding claims 29 to 45, in which the contact face (14) has an elasticity gradient.

47. Structured surface according to claim 46, in which the projections (12), the head parts (16) of which form the contact face (14), include different types of projections (12), which represent a distribution of different shapes, materials, elasticity parameters and/or sizes of the projections.

48. Structured surface according to at least one of the preceding claims 29 to 47, which includes a layer-shaped carrier (17) which is fixed on the surface of the object (10).

49. Structured surface according to at least one of the preceding claims 29 to 48, in which the projections (12) comprise a polymer, metal, alloy, semiconductor or a ceramic.

50. Structured surface according to at least one of the preceding claims 29 to 49, in which a chemical modification or an adhesive is provided on the projections (12) and/or on the end faces (13).

51. Solid body, the surface of which is at least partially a structured surface according to at least one of the claims 29 to 49.

52. Bond made from two solid bodies along a bonding surface, of which at least one has a surface which, in the region of the bonding surface, is at least partially a structured surface according to at least one of the claims 29 to 49.

**Revendications**

1. Procédé de modification de surface d'un objet (10) pour améliorer la capacité d'adhérence de l'objet, la surface (11) étant soumise à une structuration, de sorte qu'une pluralité de saillies (12) est formée, lesquelles sont formées respectivement avec une partie inférieure (15) et une partie supérieure, la partie supérieure présentant une face frontale (13) partant de la surface et toutes les faces frontales (13) présentant une hauteur verticale identique sur la surface (11) et formant une face de contact (14) adhérente et interrompue par des espacements réciproques entre les faces frontales (13)
**caractérisé en ce que**
les saillies (12) sont formées de façon élastique et inclinée par rapport à la surface dans un matériau dont l'élasticité ou la rigidité de flexion se réduit dans au moins une des directions de référence, lesquelles comprennent une direction longitudinale de chaque saillie (12) de la partie inférieure (15) à la partie supérieure et une direction transversale de chaque saillie axialement depuis le centre de la partie inférieure (15) vers l'extérieur.

**2.** Procédé selon la revendication 1, dans lequel
les saillies (12) sont formées avec une densité de surface (N), un module d'élasticité (E), une longueur (a) et une épaisseur (b) des saillies (12) de façon élastique et inclinée par rapport à la surface dans un matériau de telle sorte qu'un module élastique effectif (E*) avec $E* = E \cdot N \cdot b^2 \cdot (b/a)^2$ présente une valeur allant de 20 kPa à 10 MPa.

**3.** Procédé selon la revendication 1, dans lequel les saillies (12) sont formées dans un matériau dont le module d'élasticité se réduit d'une valeur d'élasticité supérieure à une valeur d'élasticité inférieure, la valeur d'élasticité supérieure étant choisie dans la plage de 10 MPa à 10 GPa et la valeur d'élasticité inférieure dans la plage de 20 kPa à 10 MPa.

**4.** Procédé selon la revendication 1 ou 2, dans lequel les parties inférieures (15) sont formées avec un angle de 89° à 45° par rapport à la surface.

**5.** Procédé selon la revendication 3, dans lequel les parties inférieures (15) sont formées avec un angle de 80° à 60°.

**6.** Procédé selon l'une quelconque des revendications précédentes, dans lequel les saillies (12) sont formées de telle sorte que les espacements réciproques de faces frontales (13) voisines sont inférieurs à 10 $\mu$m.

**7.** Procédé selon la revendication 6, dans lequel les saillies (12) sont formées de telle sorte que les espacements réciproques de faces frontales (13) voisines sont inférieurs à 5 $\mu$m.

**8.** Procédé selon au moins l'une quelconque des revendications précédentes, dans lequel les saillies (12) sont formées de telle sorte que les faces frontales (13) présentent une dimension de section caractéristique qui est inférieure à 20 $\mu$m et supérieure 20 nm.

**9.** Procédé selon au moins l'une quelconque des revendications précédentes, dans lequel les saillies (12) sont formées de telle sorte que les faces frontales (13) présentent au moins une des formes de faces frontales incurvées qui comprennent une forme hémisphérique, une forme cylindrique, une forme torique ou une forme de godet.

**10.** Procédé selon la revendication 9, dans lequel la forme géométrique de face frontale est formée avec un diamètre prédéfini de face frontale et un rayon de courbure qui est choisi dans la plage de 5 mm jusqu'à moitié du diamètre de la face frontale.

**11.** Procédé selon au moins l'une quelconque des revendications précédentes 1 à 8, dans lequel les saillies (12) sont formées de telle sorte que les parties inférieures (15) s'élargissent en parties supérieures (16) en forme de membrane, dont l'épaisseur est inférieure à l'épaisseur des parties inférieures (15).

**12.** Procédé selon la revendication 10, dans lequel les parties supérieures (16) en forme de membrane sont formées avec une longueur et une largeur qui sont choisies dans la plage de 20 nm à 1000 nm, et avec une épaisseur qui est choisie dans une plage de 5 nm à 100 nm.

**13.** Procédé selon la revendication 11, dans lequel les parties supérieures (16) en forme de membrane sont formées avec un module d'élasticité qui est choisi inférieur au module d'élasticité des parties inférieures (15) et dans la plage de 10 MPa à 2 GPa.

**14.** Procédé selon au moins l'une quelconque des revendications 10 à 13, dans lequel les parties supérieures (16) en forme de membrane sont fabriquées par une déformation thermique des extrémités libres des saillies (12).

**15.** Procédé selon la revendication 14, dans lequel la déformation thermique des parties supérieures comprend une mise en contact des extrémités libres des saillies (12) avec une surface réchauffée et un étirement sur la surface réchauffée.

**16.** Procédé selon au moins l'une quelconque des revendications précédentes, dans lequel les saillies (12) sont formées avec une longueur (a) et une épaisseur (b), de sorte qu'on obtient un rapport d'aspect (a/b) d'au moins 5:1.

**17.** Procédé selon au moins l'une quelconque des revendications précédentes, dans lequel les faces frontales (13) sont soumises à une modification de surface selon l'une quelconque des revendications précédentes, de sorte qu'à chaque fois une pluralité de saillies à structure fine (40) présentant chacune des faces frontales à structure fine (41) sont formées sur chaque face frontale (13).

18. Procédé selon la revendication 17, dans lequel les faces frontales à structure fine (41) sont soumises chacune à une modification de surface selon l'une quelconque des revendications précédentes, de sorte qu'à chaque fois des saillies à sous-structure (50) sont formées.

19. Procédé selon la revendication 18, dans lequel les saillies à sous-structure sont formées avec une épaisseur allant de 5 nm à 200 nm, les saillies à structure fine (40) étant formées avec une épaisseur qui est égale à 10 jusqu'à 100 fois la valeur de l'épaisseur des saillies à sous-structure (50), et les saillies (12) étant formées avec une épaisseur qui est égale à 10 fois jusqu'à 100 fois l'épaisseur des saillies à structure fine (40).

20. Procédé selon la revendication 18, dans lequel les saillies à sous-structure (50) sont soumises chacune à au moins une autre modification de surface selon l'une quelconque des revendications précédentes.

21. Procédé selon au moins l'une quelconque des revendications précédentes 17 à 20, dans lequel les saillies à structure fine ou à sous-structure (40, 50) sont fabriquées avec un procédé de flocage électrostatique.

22. Procédé selon au moins l'une quelconque des revendications précédentes, dans lequel la surface de contact (14) est fabriquée avec un gradient d'élasticité.

23. Procédé selon au moins l'une quelconque des revendications précédentes, dans lequel les saillies (12), dont les parties supérieures (16) forment la surface de contact (14), comportent diverses saillies (12), qui représentent une répartition de différentes formes, de différents matériaux, de différentes propriétés d'élasticité et/ou différentes grandeurs des saillies.

24. Procédé selon au moins l'une quelconque des revendications précédentes, dans lequel la structuration comporte la formation des saillies sur un support (17) en forme de couche, qui est fixé sur la surface de l'objet (10).

25. Procédé selon au moins l'une quelconque des revendications précédentes, dans lequel l'adhésion des saillies (12) et/ou des faces frontales (13) est améliorée par la modification chimique ou l'application d'une colle.

26. Procédé selon au moins l'une quelconque des revendications précédentes, dans lequel les saillies (12) sont formées à base d'un polymère, d'un métal ou d'un alliage.

27. Procédé pour la fabrication d'une liaison entre deux objets, dont au moins un objet a été modifié dans au moins une partie de sa surface avec un procédé selon au moins l'une quelconque des revendications précédentes, les deux objets étant amenés en contact de telle sorte que la face de contact de l'objet modifié touche l'autre objet.

28. Procédé selon la revendication 27, dans lequel au moins l'un des objets est modifié dans au moins deux parties de sa surface ou au moins deux objets partiels sont modifiés chacun dans une partie de leur surface de telle sorte que les saillies (12) sont inclinées chacune avec une orientation opposée par rapport à la face de contact.

29. Surface structurée d'un corps solide avec capacité d'adhérence améliorée, la surface (11) présentant une structuration qui comporte une pluralité de saillies (12), qui présentent chacune une partie inférieure et une partie supérieure, la partie supérieure présentant une face frontale (13) partant de la surface,
**caractérisée en ce que**
les saillies (12) sont élastiques et inclinées par rapport à la surface et présentent un matériau dont l'élasticité ou la rigidité de flexion se réduit dans au moins l'une des directions de référence, lesquelles comprennent une direction longitudinale de chaque saillie (12) depuis la partie inférieure (15) vers la partie supérieure et une direction transversale de chaque saillie axialement depuis le centre de la partie inférieure (15) vers l'extérieur.

30. Surface structurée selon la revendication 29, sur laquelle les saillies (12) avec une densité de surface (N), un module d'élasticité (E), une longueur (a) et une épaisseur (b) sont élastiques et disposées de façon inclinée par rapport à la surface et comportent un matériau dont le module élastique effectif ($E^*$) avec $E^* = E \cdot N \cdot b^2 \cdot (b/a)^2$ présente une valeur allant de 20 kPa à 10 MPa.

31. Surface structurée selon la revendication 29, sur laquelle les saillies (12) comportent un matériau dont le module d'élasticité se réduit d'une valeur d'élasticité supérieure à une valeur d'élasticité inférieure, la valeur d'élasticité supérieure étant située dans la plage de 10 MPa à 10 GPa et la valeur d'élasticité inférieure dans la plage de 20 kPa à 10 MPa.

32. Surface structurée selon au moins l'une quelconque des revendications 29 à 31, sur laquelle les parties inférieures (15) présentent un angle de 89° à 45° par rapport à la surface.

33. Surface structurée selon la revendication 32, sur laquelle les parties inférieures (15) présentent un angle de 80° à 60° par rapport à la surface.

34. Surface structurée selon au moins l'une quelconque des revendications précédentes 29 à 33, sur laquelle les espacements réciproques de faces frontales (13) voisines sont inférieurs à 10 μm.

35. Surface structurée selon la revendication 34, sur laquelle les espacements réciproques de faces frontales (13) voisines sont inférieurs à 5 μm.

36. Surface structurée selon au moins l'une quelconque des revendications précédentes 29 à 35, sur laquelle les faces frontales (13) présentent une dimension de section caractéristique qui est inférieure à 20 μm et supérieure à 20 nm.

37. Surface structurée selon au moins l'une quelconque des revendications précédentes 29 à 36, sur laquelle les faces frontales (13) présentent au moins l'une des formes de faces frontales incurvées qui comportent une forme hémisphérique, une forme cylindrique, une forme torique ou une forme de godet.

38. Surface structurée selon la revendication 37, sur laquelle la forme des faces frontales présente un diamètre de face frontale prédéfini et un rayon de courbure qui est choisi dans la plage de 5 mm jusqu'à la moitié du diamètre de face frontale.

39. Surface structurée selon au moins l'une quelconque des revendications précédentes 29 à 35, sur laquelle les parties inférieures (15) des saillies (12) s'élargissent en parties supérieures (16) en forme de membrane, dont l'épaisseur est inférieure à l'épaisseur des parties inférieures (15).

40. Surface structurée selon la revendication 39, sur laquelle les parties supérieures (16) en forme de membrane présentent une longueur et une largeur qui sont choisies dans la plage de 20 nm à 1000 nm et une épaisseur qui est choisie dans une plage de 5 nm à 100 nm.

41. Surface structurée selon la revendication 39, sur laquelle les parties supérieures (16) en forme de membrane présentent un module d'élasticité qui est inférieur au module d'élasticité des parties inférieures (15) et est choisi dans la zone de 10 MPa à 2 GPa.

42. Surface structurée selon au moins l'une quelconque des revendications précédentes 29 à 41, sur laquelle les saillies (12) présentent une longueur (a) et les faces frontales (13) les dimensions de section (b) caractéristiques, de telle sorte qu'on obtient un rapport d'aspect (a/b) d'au moins 5:1.

43. Surface structurée selon au moins l'une quelconque des revendications précédentes 29 à 42, sur laquelle les faces frontales (13) présentent chacune une pluralité de saillies à structure fine (40), lesquelles présentent chacune des faces frontales à structure fine (41).

44. Surface structurée selon la revendication 43, sur laquelle les faces frontales à structure fine (41) présentent chacune des saillies à sous-structure (50).

45. Surface structurée selon la revendication 43, sur laquelle les saillies à sous-structure présentent une épaisseur allant de 5 nm à 200 nm, les saillies à structure fine (40) présentant une épaisseur qui est égale à 10 fois jusqu'à 100 fois l'épaisseur des saillies à sous-structure (50), et les saillies (12) présentent une épaisseur qui est égale à 10 fois jusqu'à 100 fois l'épaisseur des saillies à structure fine (40).

46. Surface structurée selon au moins l'une quelconque des revendications précédentes 29 à 45, sur laquelle la face de contact (14) présente un gradient d'élasticité.

47. Surface structurée selon la revendication 46, sur laquelle les saillies (12), dont les parties supérieures (16) forment la face de contact (14), comportent diverses saillies (12) qui présentent une répartition de différentes formes, de différents matériaux, de différents paramètres d'élasticité et/ou de différentes grandeurs des saillies.

**48.** Surface structurée selon au moins l'une quelconque des revendications précédentes 29 à 47, qui comporte un support (17) en forme de couche, lequel est fixé sur la surface de l'objet (10).

**49.** Surface structurée selon au moins l'une quelconque des revendications précédentes 29 à 48, sur laquelle les saillies (12) comportent un polymère, un métal, un alliage, un semi-conducteur ou une céramique.

**50.** Surface structurée selon au moins l'une quelconque des revendications précédentes 29 à 49, sur laquelle une modification chimique ou une colle est prévue sur les saillies (12) et/ou les faces frontales (13).

**51.** Corps solide, dont la surface est au moins en partie une surface structurée selon au moins l'une quelconque des revendications 29 à 49.

**52.** Ensemble constitué de corps solides le long d'une surface de liaison, dont au moins l'un présente une surface qui, dans la zone de la surface de liaison, est au moins en partie une surface structurée selon au moins l'une quelconque des revendications 29 à 49.

**Figur 1**

**Figur 2**

**Figur 3**

**Figur 4**

**Figur 5**

**Figur 6**

Figur 7

Figur 8

Figur 9

12

A

31

B

13    40

C

40

41    50

**Figur 10**

**Figur 11**

**Figur 12**

**Figur 13**

**Figur 14**

**Figur 15**

D

**Figur 16**

**Figur 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5755913 A
- US 6099939 A
- US 6107185 A
- US 4615763 A
- WO 9932005 A
- WO 9604123 A
- WO 0050232 A
- WO 0149776 A
- EP 158721 A
- DD 156825